# EUROPEAN PATENT SPECIFICATION

(11) **EP 4 605 835 B1**
(45) Date of publication and mention of the grant of the patent: **07.10.2026**
(21) Application number: 23805813.5
(22) Date of filing: 18.10.2023
(51) Int. Cl.: G06F 13/40, G06F 13/42, G06F 1/10, G06F 1/12, G06F 13/12

(54) **DATA LANE DESKEW AND RATE ADAPTATION IN A PACKAGE CONTAINING MULTIPLE CIRCUIT DIES**
DATENSPURENTZERRUNG UND RATENANPASSUNG IN EINEM PAKET MIT MEHREREN SCHALTUNGSCHIPS
RÉALIGNEMENT DE VOIE DE DONNÉES ET ADAPTATION DE DÉBIT DANS UN BOÎTIER CONTENANT DE MULTIPLES PUCES DE CIRCUIT

(30) Priority: 18.10.2022 US 202263380042 P; 18.10.2022 US 202263380045 P
(43) Date of publication of application: 27.08.2025
(73) Proprietor: Kandou Labs SA, 1025 Saint-Sulpice (CH)
(72) Inventor: KORGER, Peter, 1025 Saint-Sulpice (CH); KOCH, Alexander, 1025 Saint-Sulpice (CH)
(74) Representative: Jones, Sam
(86) International application number: PCT/US2023/077187
(87) International publication number: WO 2024/086641

(56) References cited:
- US-A- 5 313 501
- US-A1- 2003 214 975
- US-A1- 2019 205 270

## Description

### CROSS-REFERENCE TO RELATED APPLICATIONS

This application claims the benefit of U.S. Application No. 63/380,045, filed October 18, 2022, entitled "DATA LANE DESKEW AND RATE ADAPTATION IN ASYNCHRONOUS FIFO OF MULTI-LANE PCIE RETIMER", and claims the benefit of U.S. Application No. 63/380,042, filed October 18. 2022, entitled "DATA LANE DESKEW AND RATE ADAPTATION IN A PACKAGE CONTAINING MULTIPLE CIRCUIT DIES".

### REFERENCES

The following documents are referred to :

U.S. Patent No. 9,100,232, issued August 4, 2015, entitled "Method for Code Evaluation Using ISI Ratio", naming Amin Shokrollahi, filed as U.S. Patent Application No. 14/612,241 on February 2, 2015, which published as U.S. Publication No. 2015/0222458 on August 6, 2015, referred to herein as [Shokrollahi],

### BACKGROUND

With increased data rate in PCIe 5.0 (32 Gbps) compared to previous generations (e.g., PCIe 4.0 MAX 16 Gbps), the channel reach becomes even shorter than before, and the need for retimers becomes more evident. Typical channels comprise system boards, backplanes, cables, riser-cards and add-in cards. Connections across these kinds of channels - often combinations of these channels and their sockets - usually have losses that exceed the specified target loss of -36 dB at 16 GHz. Retimers extend the channel reach to get across the border to what is possible without a retimer.

Retimers break a link between a host (root complex, abbreviated RC) and a device (end point) into two separate segments. Thus, a retimer re-establishes a new PCIe link going forward, which includes re-training and proper equalization implementing the physical and link layer.

While redrivers are pure analog amplifiers that boost the signal to compensate for attenuation, they also boost noise and usually contribute to jitter. Retimers instead comprise analog and digital logic. Retimers equalize the signal, retrieve their clocking, and output a signal with high amplitude and low noise and jitter. Furthermore, retimers maintain power states to keep system power low.

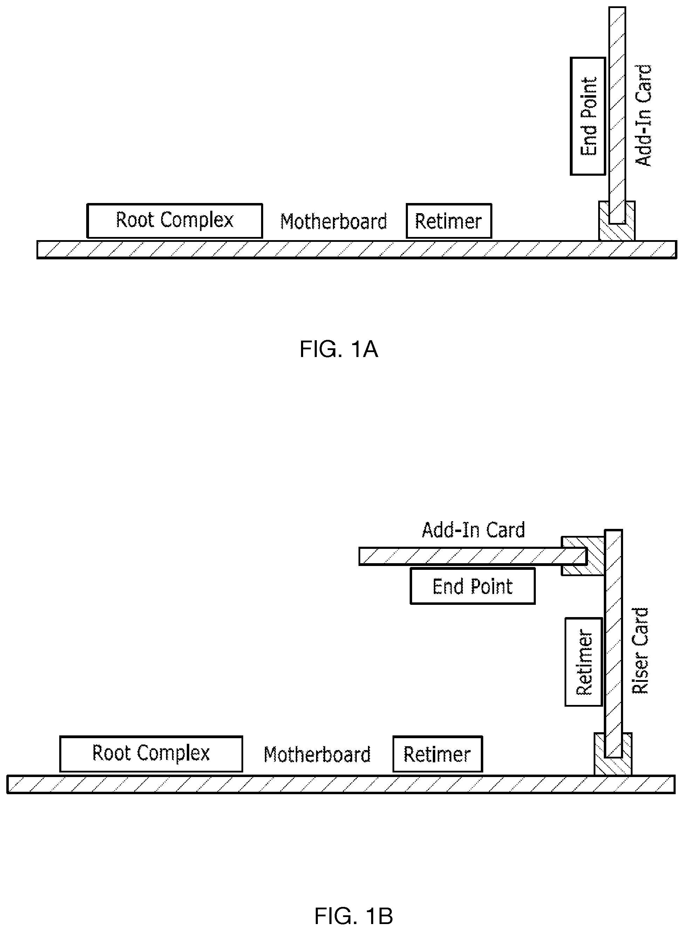

Retimers were first specified in PCIe 4.0. For PCIe 5.0, the usage of retimers is expected. FIG. 1A and FIG. 1B show typical applications for retimers, in accordance with some embodiments. In Fig. 1A, one retimer is employed. The retimer is located on the motherboard, and logically the retimer is between the PCIe root complex (RC) and the PCIe endpoint.

FIG. 1B shows the usage of two retimers. The first retimer is similarly located on the motherboard, while the second retimer is on a riser card which makes the connection between the motherboard and the add-in card containing the PCIe endpoint.

In complex PCIe systems, the number of PCIe endpoints can be significantly higher than the number of free PCIe ports. In such scenarios, switch devices may be used to extend the number of PCIe ports. Switches allow for connecting several endpoints to one root point, and for routing data packets to the specified destinations rather than simply mirroring data to all ports. One important characteristic of switches is the sharing of bandwidth, as all endpoints share the bandwidth of the root point.

US2003214975A1 discloses a device, system and method for aligning data received on a plurality of data lanes in a data link. One or more alignment vectors are generated for each of a plurality of data lanes where each alignment vector represents a location of an alignment character in an associated one of the data lanes. For each data lane, a plurality of alignment vectors may be associated with one or more alignment windows associated with the data lane. If the alignment vectors of the data lanes are associated with a common alignment window, an alignment position may be selected for each data lane.

US5313501A relates to the following. In a computer system, parallel streams of digital data are transmitted from a source to a destination in bursts or packets. At the beginning of each burst all the parallel data signals contain a start bit. Each data signal is received by a deskewing buffer which transmits the data signal through a delay line with multiple taps. At the beginning of each clock cycle the signal value Data(i) at each tap (i) in the delay line is latched. Each resulting latched signal value LData(i) is compared with the latched signal value LData(i+1) for the next tap down the delay line to generate a set of comparison signals C(i). When the start bit of a new burst is received, one of the comparison signals will have a distinct value from all the others, thereby indicating the delay line tap at which the phase of the received data signal is approximately synchronized with the receiver's clock signal. The data stored in the deskewing buffer's latches represents the phase of the received digital signal and is retained until the end of the burst transmission. A multiplexer which outputs a selected one of data signals from the tapped delay line in accordance with the values of the comparison signals. The selected data signal is sampled and latched at each clock cycle, thereby generating a deskewed data signal that is synchronized with both the receiver's clock signal and also with the other parallel data streams.

US2019205270A1 discloses differing widths of retimers that are developed using differing numbers of individual retimer elements combined together. To maintain synchronous operation, various signals are provided between the individual retimer elements to allow synchronization of the various operations. A first signal is a wired-OR signal that is used for event and operation synchronization. A second set of signals form a serial bus used to transfer proper state information and operation correction data from a master retimer element to slave timer elements. The combination of the wired-OR signal and the serial bus allow the various state machines and operations inside each retimer element to be synchronized, so that the entire width of the link is properly synchronized.

### BRIEF DESCRIPTION

In a first aspect, the invention provides a method as set out in appended claim 1.

In a second aspect, the invention provides an apparatus as set out in appended claim 7.

### BRIEF DESCRIPTION OF FIGURES

FIGs. 1A and 1B illustrate two usages of retimers, in accordance with some embodiments.
FIG. 1C is a block diagram of a retimer data path, in accordance with some embodiments.
FIG. 2 is a block diagram of three configurations for routing lanes between ports in a retimer, in accordance with some embodiments.
FIG. 3 is a block diagram illustrating two possible two-die combinations in one package, in accordance with some embodiments.
FIG. 4 is a block diagram of a four-die combination in one package, in accordance with some embodiments.
FIG. 5 is a block diagram of another four-die combination in one package incorporating die-to-die communications, in accordance with some embodiments.
FIG. 6 is a block diagram of a high-speed die-to-die interconnect, in accordance with some embodiments.
FIG. 7 is a block diagram of a crossbar switch, in accordance with some embodiments.
FIG. 8 is a block diagram of a system for performing lane deskewing, in accordance with some embodiments.
FIG. 9 is a timing diagram for deskewing in a minimum skew scenario, in accordance with some embodiments.
FIG. 10 is a timing diagram for deskewing in a typical skew scenario, in accordance with some embodiments.
FIG. 11 is a timing diagram for deskewing in a maximum skew scenario, in accordance with some embodiments.
FIG. 12 is a block diagram of a system for performing rate adaptation, in accordance with some embodiments.
FIG. 13 is a block diagram of a multi-tile communication system for lane-to-lane alignment between tiles, in accordance with some embodiments.
FIG. 14 is a schematic and timing diagram for a tile-clock generator, in accordance with some embodiments.
FIG. 15 is a diagram of a FIFO fill level over the course of a rate adaptation procedure.
FIG. 16 is a schematic of a multi-tile communication system for rate adaptation, in accordance with some embodiments.
FIG. 17 is a timing diagram of information exchange for multi -tile rate adaptation, in accordance with some embodiments.
FIG. 18 is a flowchart of a method 1800, in accordance with some embodiments.

### DETAILED DESCRIPTION

Despite the increasing technological ability to integrate entire systems into a single integrated circuit, multiple chip systems and subsystems retain significant advantages. For purposes of description and without limitation, example embodiments of at least some aspects of the invention herein described assume a systems environment of at least one point-to-point communications interface connecting two integrated circuit chips representing a root complex (i.e., a host) and an endpoint, (2) wherein the communications interface is supported by several data lanes, each composed of four high-speed transmission line signal wires.

Retimers typically include PHYs and retimer core logic. PHYs include a receiver portion and a transmitter portion. A PHY receiver recovers and deserializes data and recovers the clock, while a PHY transmitter serializes data and provides amplification for output transmission. The retimer core logic performs deskewing (in multi-lane links) and rate adaptation to accommodate for frequency differences between the ports on each side.

Since the retimer is located on the path between a root complex (e.g., a CPU) and an end point (e.g., a cache block) the retimer adds additional value. An integrated processing unit, e.g., an accelerator, may be integrated into the retimer performing data processing on the path from the root complex to the end point.

To allow for a highly flexible solution, the PCIe retimer has normal PHY interfaces towards the PCIe bus and a high-speed die-to-die interconnect towards a data processing unit (DPU). The high-speed die-to-die interconnect allows for very high-speed communication links between chiplets in the same package. The PCIe retimer circuit is a chiplet, a die, with a four-lane retimer and the capability to connect to a DPU chiplet via the high-speed die-to-die interconnect. One, two or four lanes can be bundled into a multi-lane link where data is spread across all of the links. It is also possible to configure each lane individually to form a single-lane link. In the PCIe retimer, each lane employs two PHYs, one on each end (up- and downstream ports). Considering four lanes, eight PHYs are used in one PCIe retimer die. The PCIe retimer die also contains communication lines which allow for exchanging control information between two or more PCIe retimer dies.

The following can be built using one (or more) PCIe retimer chiplet(s). These are discussed in more detail below:
- 4-lane retimer
- Single die, with full flexible 4x4 static lane routing
- 4-lane retimer with accelerator (DPU)
- Two dies in one package, a retimer die and a DPU die
- 8-lane retimer
- Two dies in one package, limited static lane routing - flexible 4x4 routing on same die but no data crossing die boundaries
- 8-lane retimer with full flexible lane routing
- Two dies in one package, data crossing chiplets are routed through high-speed die-to-die interconnect at the cost of additional delay.
- 8-lane retimer with accelerator (DPU)
- Three dies in package, two retimer dies and a DPU die
- 16-lane retimer
- Four dies in one package, limited static lane routing - flexible 4x4 routing on same die but no data crossing die boundaries

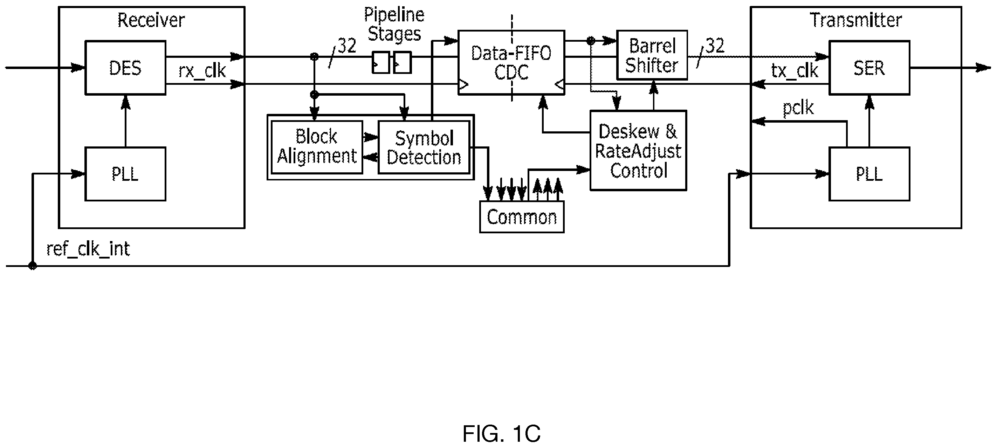

FIG. 1C shows data path for a PCIe retimer circuit of FIGs. 1A and 1B, in accordance with some embodiments. The retimer data path of FIG. 1C applies to single-tile and multi-tile embodiments. Two possible solutions for transferring data from the receiver to the transmitter include the FIFO storing encoded data and the FIFO storing decoded data.

In the scenario the FIFO stores encoded data, data received at the PHY can be 8b10b or 128b130b encoded. The data is split into 16 or 32 bit chunks anywhere in the data stream. In this mode, received data is directly forwarded and stored in the FIFO. In parallel, data is also decoded with block detection and block alignment circuits. The block boundaries allowing exact location identification of an ordered set (i.e., a block) in the received data steam are stored as side-band information in the FIFO. To accommodate for processing delay required for block alignment, pipeline stages may be added. After the FIFO, a barrel-shifter aligns blocks to a common start position in a deskewing process. The sync header bits are part of the data stream. A transfer to a transmitter can be done without further modification.

In the scenario the FIFO stores decoded data, received data is directly decoded into 8b or 128b chunks using block detection and alignment logic. Overhead information like control/data-type identifier (8b10b) or sync header information (start of block, type of ordered set, 128b130b) are extracted from the data but and stored together with the decoded data as sideband information in the FIFO. Data in the FIFO is aligned to ordered set boundaries by nature, and deskewing involves moving the FIFO read pointer to the appropriate location where the alignment symbols are stored. When forwarding FIFO read data to the transmitter, sync-header bits are inserted into the data stream again. Removing and inserting sync header bits typically results in idle cycles. It should be noted that regarding SKP ordered set insertion/removal, there is not much difference between the two modes in 128b130b mode. The incoming SKP ordered set will have a length of at least 12 symbols where the first eight symbols (64 bits) include identical bytes. 32 bits can be taken out of the eight symbols at any position. As shown in FIG 1C, encoded data will always be stored in the FIFO. The block description provided in following sections relate to this data transfer mode.

### Chip Configurations

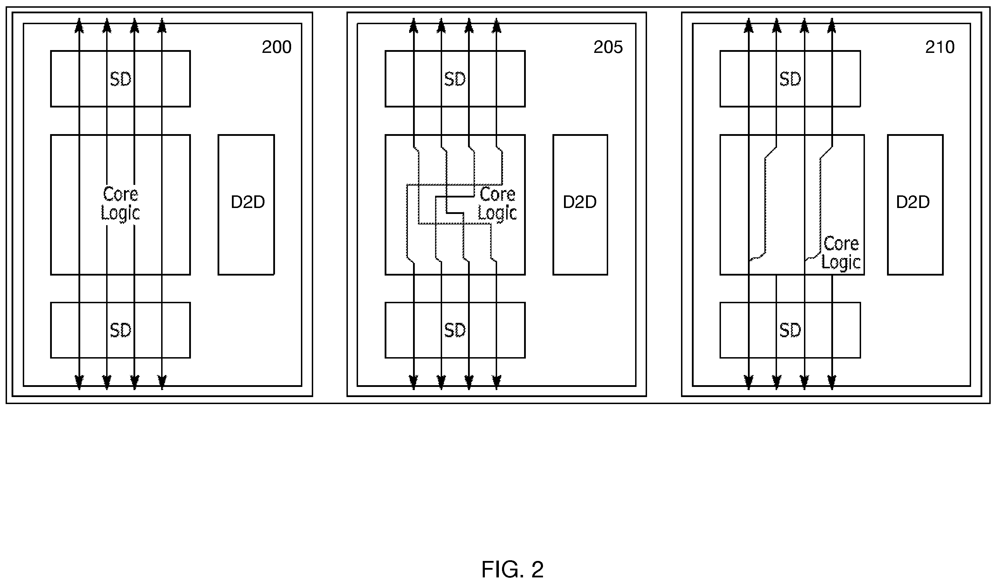

FIGs. 2-5 illustrate various configurations of a PCIe retimer circuit from a data flow perspective, in accordance with some embodiments. Each diagram depicts packages containing up to four dies. FIG. 2 illustrates three lane routing options for packages containing one die. Such an embodiment may function as a 4-lane PCIe retimer. All data from one port passes through lane routing logic to another port on the same circuit die. The Raw MUX routes each data lane individually between ports. The package 200 shows a feed-through path, package 205 shows a twisted path, and package 210 shows port mirroring. Specifically, in package 210, only one direction is shown; an additional mirroring is available in the opposite direction. In some embodiments, the serial-deserializers (SD) on the top of each configuration drawing may be connected to e.g., an upstream device, such as a root complex, while the SD on the bottom of each configuration drawing may be connected e g., to an endpoint, or vice versa.

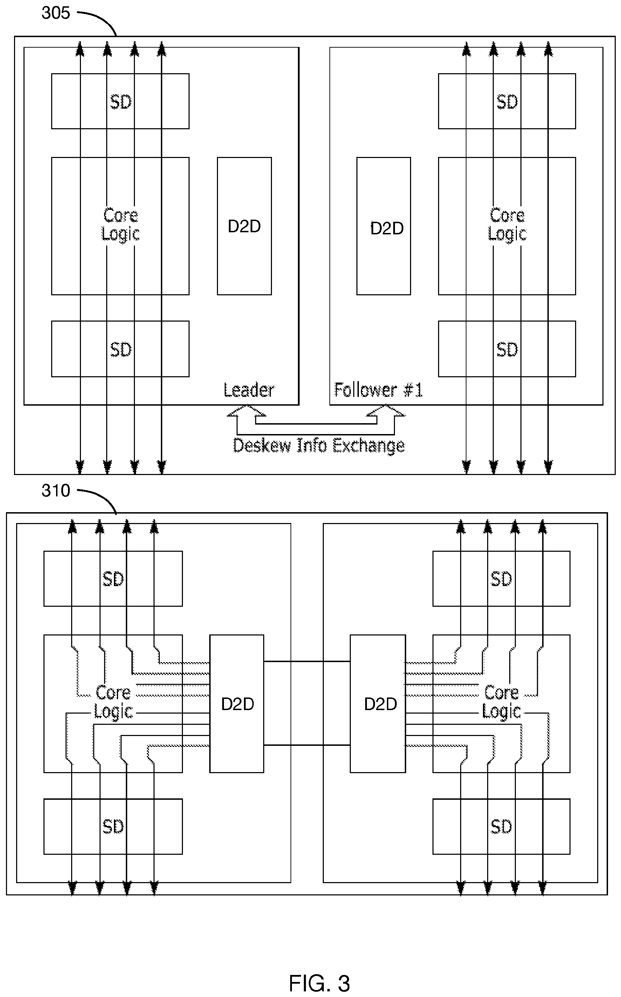

FIG. 3 shows packages for two possible two-die combinations in one package. Package 305 may correspond to an 8-lane PCIe retimer with minimum latency, having a tradeoff with respect to routing configurations as each lane is routed between upstream and downstream ports on the same die. Communication links between the two dies exchange deskew information to perform lane deskewing across all eight lanes.

Package 310 of FIG. 3 may correspond to an 8-lane PCIe retimer circuit with full routing flexibility across the circuit dies at the cost of additional latency and power dissipation from the die-to-die (D2D) interconnect. The Raw multiplexer (MUX) in each PCIe retimer circuit die routes either to the opposite port directly (as shown in 305) or to the high-speed die- to-die interconnect (as shown in 310). When routing through the high-speed die-to-die interconnect, data can be passed to the neighbor die. In such a use case, the lane-to-lane deskewing is performed on one die and no chip-to-chip deskew information is exchanged.

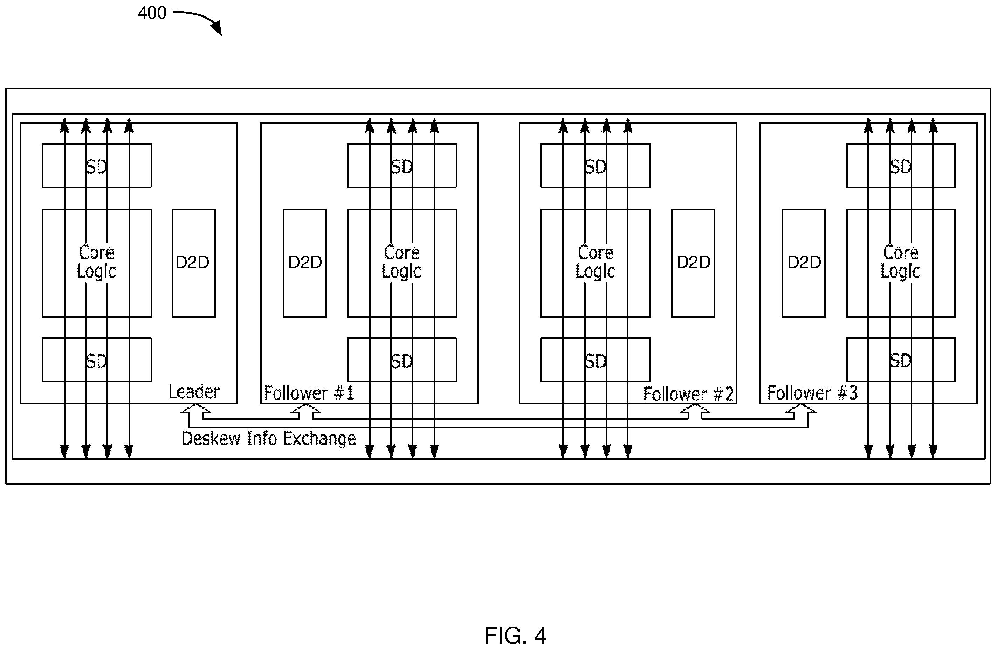

FIG. 4 shows a package 400 containing four dies. Such a package may operate as a 16-lane PCIe retimer circuit. In such an embodiment, communication links between the four dies exchange deskew information to perform lane deskewing across all 16 lanes. In such an embodiment, the D2D interconnect is not used.

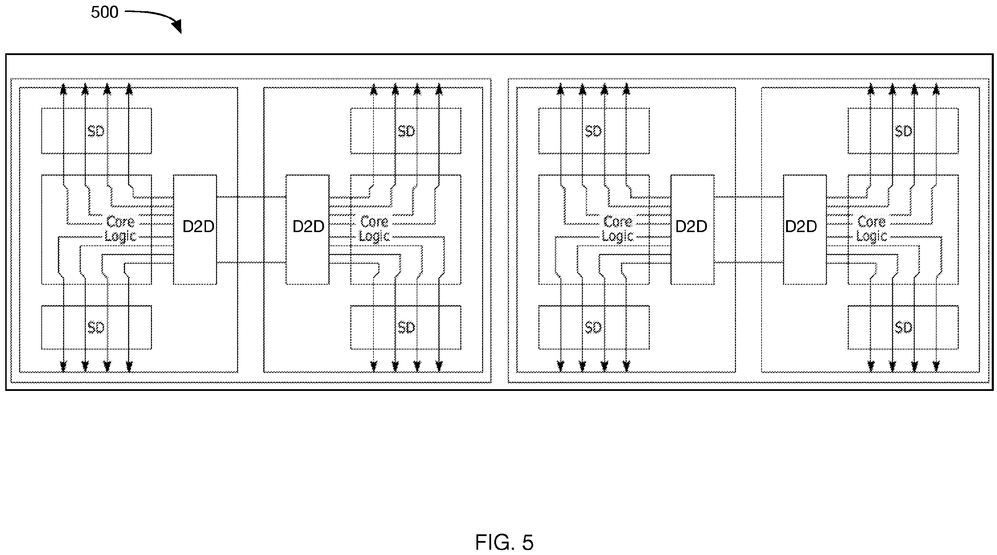

FIG. 5 shows another four-die combination package 500. Such a configuration allows for a 16-lane PCIe retimer circuit with 2 x 8 lane flexible routing. As shown, data routing between the left pair of circuit dies and the right pair of circuit dies allows for full routing within eight lanes at the cost of additional latency.

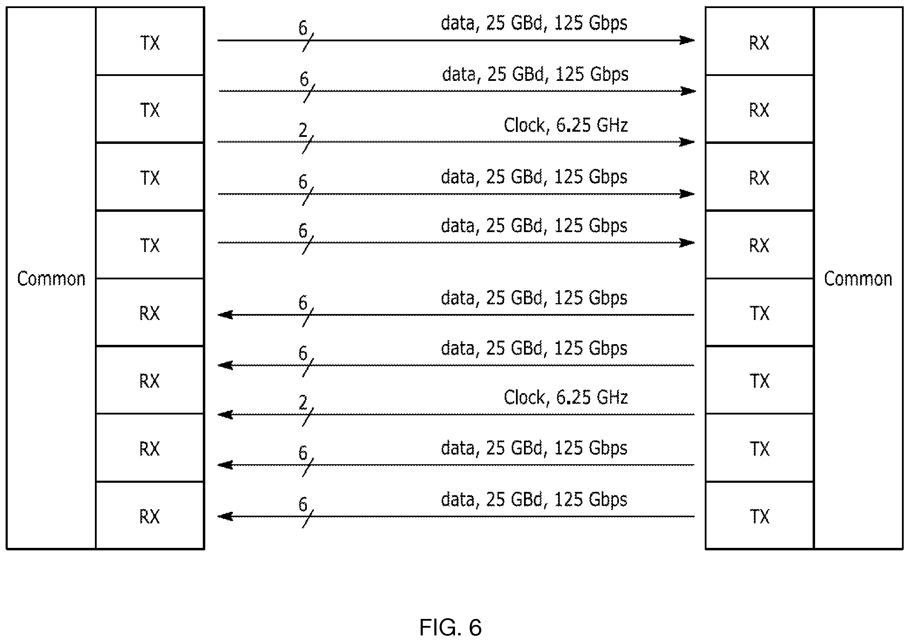

FIG. 6 is a block diagram of a high-speed die-to-die interconnect, in accordance with some embodiments. As shown, the high-speed die-to-die interconnect utilizes eight transceiver paths, each operating at a rate of 25GBd, transmitting 5 bits over 6 wires for a total throughput of 125Gbps. Furthermore, the interface includes two differential clock lanes operating at 6.25GHz. The high-speed die-to-die interconnect may utilize the 5b6w code of [Shokrollahi], also referred to as the "Glasswing" Code.

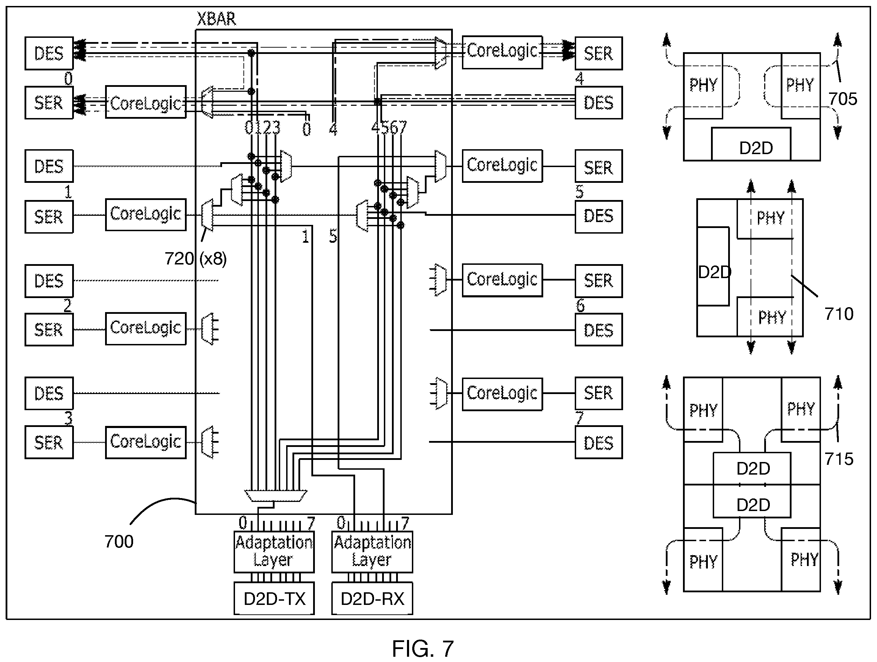

FIG. 7 is a block diagram of a lane switching multiplexer (MUX), also referred to herein as a crossbar switch 700 or lane routing logic for lane routing in a retimer circuit die of an ICM, in accordance with some embodiments. FIG. 7 includes a block diagram on the left and various lane routing configurations on the right. In the top lane routing configuration 705, data is fed in through a deserializer, passes into the PHY and through the core logic and through the same PHY and output via the serializer down to the bottom. In the middle diagram 710, the data is fed into one port, processed in the core logic and fed out at the opposite PHY on the bottom. Finally, in the bottom drawing 715, all data is fed into the PHYs at the top side of one PCIe retimer circuit and from there directly forwarded to the high-speed die-to-die interconnect. From there data is fed through the core logic and then to the PHYs on the bottom side of the other PCIe retimer die. In all such scenarios, there are data paths in the opposite direction as well.

On the left side of FIG. 7, a sketch of the Raw MUX logic is shown. The serial data transceiver PHYs are numbered from 0 to 7 and include receiver deserializers (DES) and transmitter serializers (SER). The top lane (PHY #0 and #4) illustrates the three different data paths matching the data paths shown on the right. Data path 705 on the right corresponds to data coming in on PHY 0 of the PCIe retimer circuit leaving on the same PHY #0 on the lefthand side of FIG. 7. Path 710 shows a feed-through path where data received on PHY 0 passes through to PHY #4 as shown on the left-hand side of FIG. 7. Finally, path 715 indicates that all received data is directly forwarded to adaptation layer to be transmitted over the inter-die data interface. On the second PCIe retimer, data from the inter-die data interface is forwarded to the core logic, where it is processed and output on the attached PHY.

The second lane (PHY #1 and #5) indicate the multiplexing capabilities. Each core-logic/transmitter path can receive data from each of the eight lanes. Additionally, data can be obtained from the inter-die data interface. The other lanes (PHY #0 with #4, PHY #2 with #6 and PHY #3 with #7) have the same switching capabilities. On the bottom, the multiplexing for one lane to the inter-die data interface is shown. Any input PHY can be select for each lane entering the high-speed die-to-die interconnect. Thus, some embodiments may mirror data by selecting the same received PHY data for multiple adaptation layer physical ports. Details on port mirroring embodiments are described in more detail below.

Switching a data path in the Raw MUX includes the 32-bit received data bus carrying the deserialized lane-specific data words, accompanying data enabled lines, the recovered clock, and the corresponding reset. It is important to note that only raw data is multiplexed, the received data is not processed in any way. The Raw MUX logic is statically configured via configuration bits, the switching itself happens asynchronously. In case the Raw MUX settings are changed during mission mode, invalid data and glitches on the clock lines are likely. Thus, the multiplexing logic setup may be changed during reset.

### Multi-Lane Deskewing

Deskewing and rate adaptation are related to each other and are implemented in the same block (Deskew & Rate-Adjust Control). First the lane-to-lane skew is compensated. This process is also known as lane alignment and is typically done using a FIFO. For this purpose, alignment symbols are detected in the data stream. Due to the skew between lanes, these alignment symbols are received at different times in each lane. In the deskewing process, the received alignment symbols are stored into the FIFO and the location of these alignment symbols within the FIFO is also stored. This happens independently in all lanes using the recovered clocks of each lane independently. When the alignment symbols of all lanes are stored within their respective FIFOs, data is read from the FIFO starting from the read pointer defining the location where the alignment symbol was stored. On the read side, the read pointers for the FIFO in each line are set to the locations where the alignment symbols are stored. The read pointers are set at the same time in all lanes with a common clock so that the first data output from each FIFO corresponds to the alignment symbols. The FIFO fill level of each lane is observed, and depending on the fill level, special data for rate adaptation is either inserted if the FIFO fill level is almost empty or removed if the FIFO level is almost full. In such a scenario, rate adaptation symbols are used for this purpose. When these rate adaptation symbols are seen at the same time in all lanes (which is the case after the deskewing process), the data can be either removed or duplicated (inserted) at the same time in all lanes. Rate adaptation is described in more detail below.

One challenge addressed below is that in retimer mode, all transmitters are synchronized to a common reference clock. However, in a retimer, it is typical that each data lane has its own read clock and that a common read clock is not available. The read clock essentially corresponds to the transmit clock of the attached serializer. Another challenge involves exchanging alignment and FIFO status between all tiles within a multi-tile system via low-speed I/O pads, as described in more detail below. Methods and systems described below combine lane-to-lane deskew and multi-lane rate adaptation in common FIFOs for each lane via synchronous changes to the read pointer of each lane's FIFO.

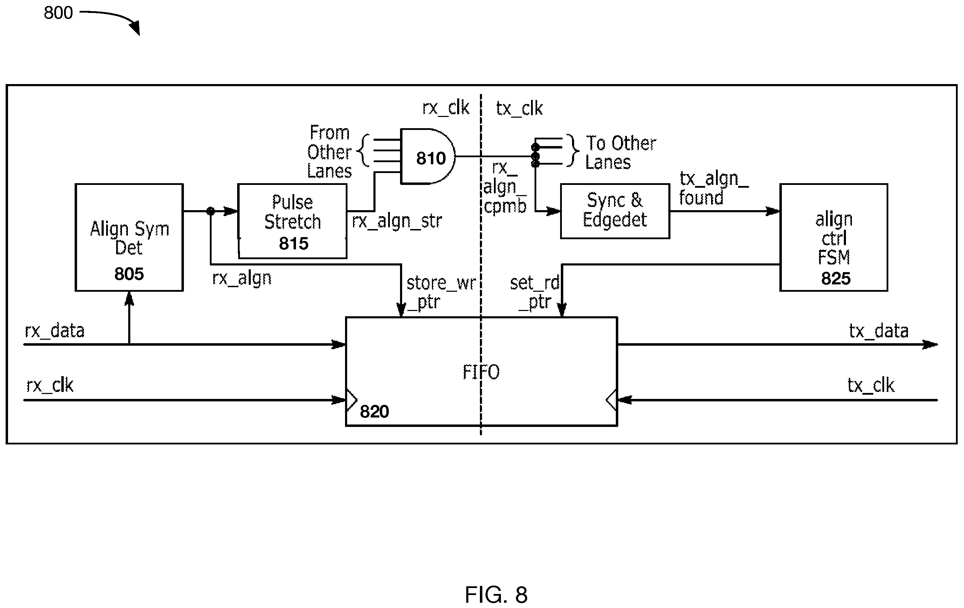

FIG. 8 is a block diagram illustrating lane alignment logic 800 for performing lane deskewing concept in a PCIe retimer circuit, in accordance with some embodiments. In some embodiments, a method for performing lane deskewing includes independently detecting, using alignment symbol detection logic 805, an alignment symbol within a first-in-first-out (FIFO) buffer 820 in each data lane according to a recovered clock signal rx_clk, and responsively generating a single cycle pulse rx_algn responsive to detection of the alignment symbol. Once the alignment symbol is stored, the location within the FIFO is also stored as a write pointer, which may further include storing the bit-level start position of the alignment symbol within the 32-bit location of the FIFO. In some embodiments, the alignment symbol is a 32-bit symbol. It should be noted that since encoded data is stored in the FIFO, the block boundary continuously changes and thus the block boundary of the alignment symbol is stored as well. The method further includes independently generating a lane-specific alignment found pulse rx_algn str for each data lane, e.g., by stretching, using pulse stretch logic 815, the alignment detection pulse rx_algn. indicating that the alignment symbol is stored in the FIFO. In some embodiments, the length of the pulse depends on the required deskewing capabilities. For example, when N is the maximum deskewing capability (in clock cycles), then the length of the pulse L = ceil(N+2). In such an embodiment, N is defined by the maximum input skew plus the skew introduced by the deserializers (which is bit width - 1UI) and the synchronizer. The stretched alignment pulses of all data lanes are asynchronously combined via a tile-specific AND gate 810 indicating that alignment symbols are stored in the FIFOs of all data lanes for the tile. It should be noted that since the read clocks of each data lane are independent, the AND combination is performed prior to synchronization. In some embodiment, the AND combination is built from instantiated tech cells to prevent glitches at the input of the synchronizer. In each data lane, the AND-ed signal rx_algn comb is synchronized to the aligned transmit clock tx_clk. The rising edge of the synchronized signal is detected. Stretching the alignment pulse rx_algn str as described above by two additional clock cycles beyond the required deskew capabilities ensures that even in a scenario that maximum skew is present between two data lanes, the remaining pulse width is at least two clock cycles long. Such a length is sufficient for secure clock domain crossing, as the clock domain changes from the rx_clk in the receiver to the tx_clk in the transmitter. In some embodiments, the FIFO read clocks of all lanes are aligned to a common reference clock in retimer mode. A single-cycle rising edge pulse output from the alignment control finite state machine (FSM) 825 is used to set the read pointer of the FIFO to be equal to the stored write pointer, thus setting the current read location of the FIFO to be the location of the alignment symbol. As the rising edge pulse has been synchronized for all FIFOs, the read pointer update occurs at the same time in all FIFOs. Since encoded data is stored in the FIFO, alignment may include adjustment of an internal barrel shifter to accommodate for the different block boundary locations in different lanes. Furthermore, since the read clocks are independently aligned to the common reference clock, a minimum skew equal to a single clock cycle may continue to exist between the data lanes. Such a skew is accepted and within the transmit skew budged defined by the PCIe base specification. Alignment may cause a discontinuity in the data stream sent downstream. In some embodiments, a configuration bit selecting between outputting a fixed pattem (e.g., a high-speed 1010 pattem) or outputting previously received data, accepting the discontinuity. Once the lanes have been deskewed, reading from the FIFOs continues and the alignment symbols are output from all the FIFOs at the same time. In some embodiments, a barrel shifter may be used to adjust the effective FIFO read position so that reading begins with the sync header bits of the alignment symbol. Since encoded data is stored in the FIFO, the location of an alignment ordered set may start anywhere in the FIFO. In one lane, the alignment ordered set may start in bit 3, in another at bit 19, and in yet another at bit 11. After alignment, the first bit of the alignment ordered set must start at bit 0. The barrel shifter allows the shifting of all bits of a word by a certain number of bits. In this example, the data from the first lane may be shifted 3 bits, the data of the second land shifted 19 bits, and the data of the third lane shifted 11 bits. It should be noted that as the sync header bits are part of the data stream, no further action is required for 128b130b encoded data streams.

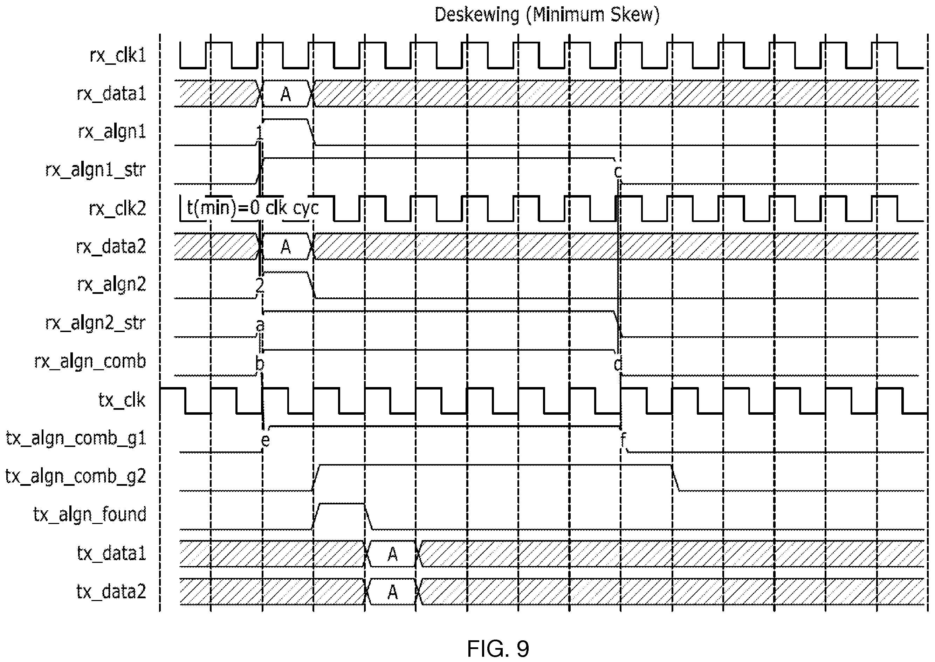

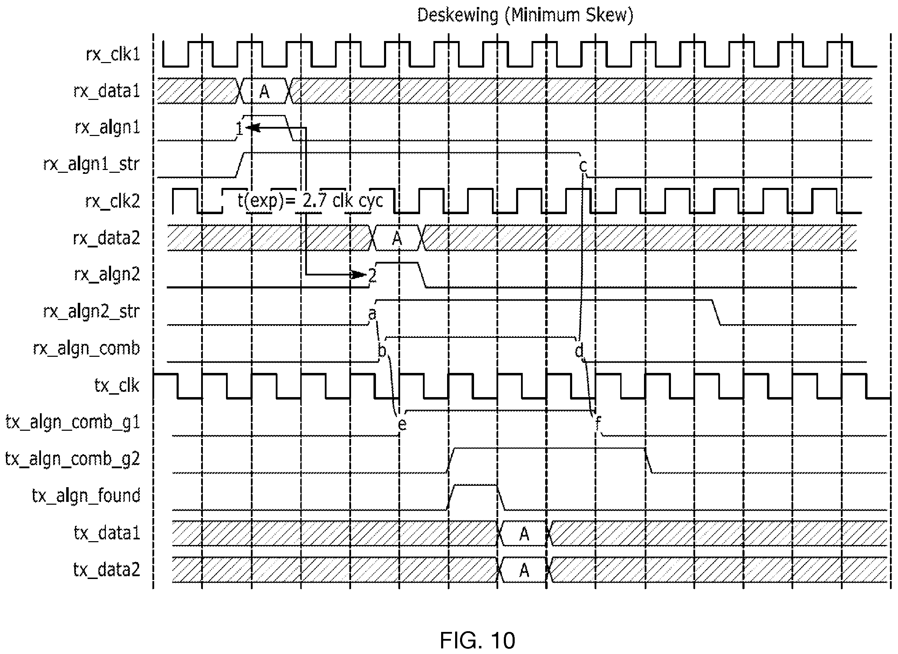

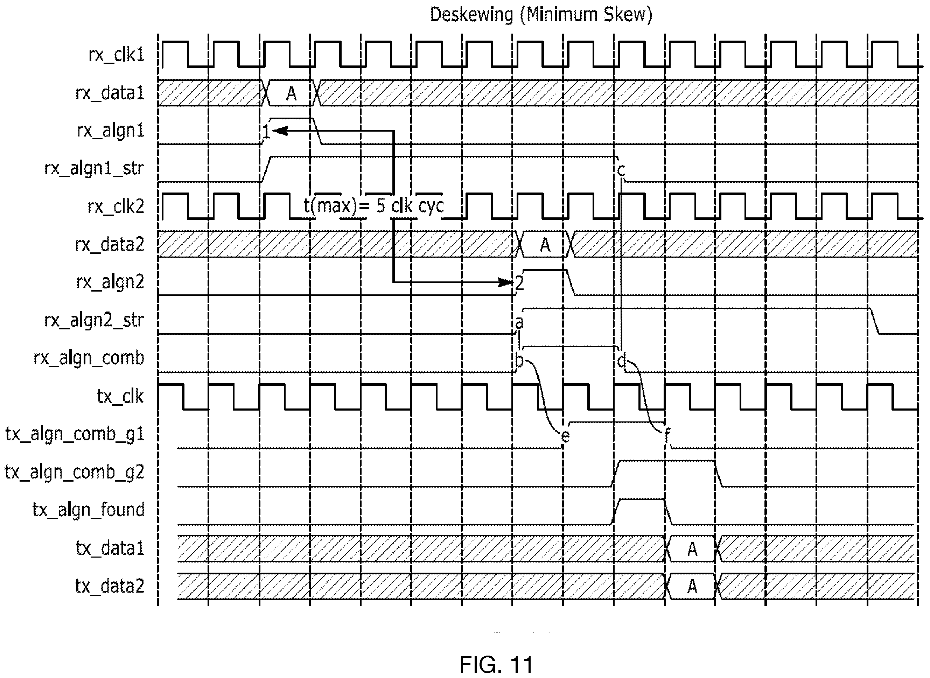

FIGs. 9-11 are three timing diagrams illustrating the lane deskewing process for cases with various amounts of skew. In FIG. 9, the two data lanes have a minimum amount of skew between them. In FIG. 10 the two data lanes have a typical or moderate amount of skew between them, specifically about 2.7 clock cycles in this scenario. In FIG. 11, the two data lanes have a high amount of skew, in this scenario roughly five clock cycles.

Rx_clk*X* and rx_dataX are recovered clock and received data lines, respectively, of lanes 1 and 2, which may be FIFO write clock and data. Rx_algn*X* is the pulse indicating that the alignment symbol (A) has been found. Rx_algn*X* is also used to trigger a storing of the FIFO write pointer. Rx_algn*X*_str is the stretched pulse, in these examples stretched by six additional clock cycles. Rx_algn_comb is the AND-combination of all rx_algnX_str signals from all data lanes. Tx_clk is the transmit clock as well as the FIFO read clock. Tx_algn_comb_gl,2 are the synchronized AND-combined signals (after 1^{st} and 2^{nd} sync-FF). Tx_algn_found is the decoded rising edge of tx_algn_comb_gl and is used to set the read pointers in the FIFOs for lanes 1 and 2. Tx_datal,2 signals are the FIFO output data sent to the transmit logic.

### Rate Adaptation

After deskewing, rate adaptation is performed. During rate adaptation, the FIFO fill level is observed and depending on the fill level, skip (SKP) ordered set symbols for rate adaptation are either inserted if the FIFO fill level is becoming empty or removed if the FIFO fill level is becoming full. As the data lanes have been deskewed, the rate adaptation symbols are seen at the same time in all lanes, and they can be either removed or duplicated (inserted) at the same time in all lanes. Rate adaptation may be performed to maintain the current fill level of the FIFOs of each data lane within an acceptable range to prevent overflow or underflow.

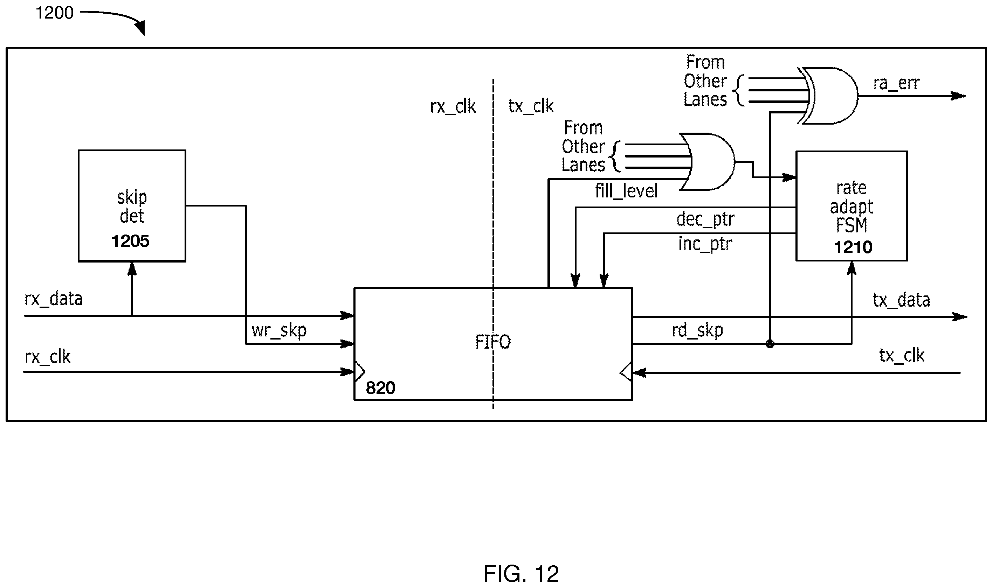

FIG. 12 illustrates a block diagram of rate adaptation logic 1200, in accordance with some embodiments. In FIG. 12, a single cycle pulse wr_skp is issued responsive to the detection of a skip symbol using skip symbol detection logic 1205. The pulse is issued independently in all lanes on the recovered clock (FIFO write clock, rx_clk respectively). The skip pulse is fed to the FIFO 820 as sideband information, and is stored one memory location in advance - not together with the corresponding skip symbol itself. As shown, the same FIFO from the lane deskew 820 is used for rate adaptation, however some embodiments may utilize separate FIFOs for each function. In some embodiments, utilizing the same buffer to perform both lane-to-lane deskew and rate adaptation operations reduces the overall latency of the retimer path. On the FIFO read side, having the information if there is a skip or not present one clock cycle before the skip symbol is read allows for either removing the skip symbol (called a "truncation") or inserting a symbol, e.g., by reading the skip symbol twice, (also called "padding").

As described above, the fill level of all FIFOs is observed using rate adaptation FSM 1210. When any FIFO indicates that the FIFO is full, a "truncation" is performed, and a skip symbol is removed concurrently from all FIFOs. In some embodiments, removing the skip symbol corresponds to double incrementing the read pointer of the FIFO for one clock cycle. Similarly, when any FIFO indicates FIFO empty, a "padding" is performed. In such a scenario, a skip symbol is inserted concurrently in all FIFOs. In some embodiments, the existing symbol is read twice, and the FIFO read pointer is not incremented for one clock cycle.

Skip symbol insertion or removal is only possible if a skip symbol is stored in the FIFO. The skip side-band information, which becomes active one clock cycle before the actual skip symbol would be read and output, triggers padding or truncation. The skip indication dec_ptr, inc_ptr is present in all FIFOs at the same time. If the skip indication is not present in all FIFOs concurrently, a rate adaptation error (ra_err of FIG. 12) is issued.

In some embodiments, a flag is issued when the FIFO pointer wraps back to the starting location of the FIFO. The flag is synchronized into the FIFO read side and then the FIFO read pointer value is evaluated. In some embodiments, the MSB of the FIFO write pointer is synchronized to the FIFO read side performing a rising edge detection on the synchronized signal and to evaluate the read pointer value. The FIFO stores all data until it is possible to perform rate adaptation to avoid losing data. In a worst-case scenario, the FIFO-full or FIFO-empty indication occurs right after a skip symbol passed into the FIFO. At least one additional word is stored until the next skip symbol arrives. In some embodiments, the skip symbols are not distributed equidistantly, and the FIFO size is increased accordingly. To avoid FIFO-write and -read pointers converging on each other (which would result in the FIFO read side reading unstable data), additional FIFO fill level indications may be provided. In one scenario, if the FIFO is full and no rate adaption decreased the FIFO fill level, a FIFO overflow indication is issued as an error flag. In another scenario, if the FIFO is empty an no rate adaption increased the FIFO fill level, a FIFO underflow indication is issued as an error flag.

Rate adaptation in 128bl30b modes (PCIe Gen-3/4/5) happens in chunks of 32 bits. Since the sync header bits are part of the data stream, and thus the length of an ordered set is not a multiple of 16 or 32, the exact location of skip ordered sets changes. Insertion or removal of 32-bit chunks thus account for ordered set boundaries. In some embodiments, the sync header bits are stored as side-band information, and thus the ordered set boundaries are maintained.

As mentioned above, combining the lane-to-lane deskew functions and the rate adaptation functions into the same FIFO reduces latency as data in each lane traverses through a single FIFO rather than multiple FIFOs. An apparatus includes alignment symbol detection logic 805 configured to detect alignment symbols in first-in-first-out buffers (FIFOs) 820 of a plurality of data lanes of a data link, and to store FIFO addresses corresponding to locations of alignment symbols in each FIFO. The apparatus further includes an alignment control finite state machine (FSM) 825 configured to synchronously adjust read pointer locations of each FIFO 820 to the stored FIFO addresses corresponding to the location of the alignment symbol in the FIFO responsive to alignment symbols being detected in every data lane. The apparatus further includes skip symbol detection logic 1205 configured to detect skip ordered sets (SKPs) in each FIFO 820, and to responsively store a SKP pulse one address in advance of the SKP in each FIFO 820, each SKP comprising two or more SKP symbols. The apparatus further includes a rate adaptation FSM 1210 configured to monitor a fill level of each FIFO of the plurality of data lanes, to queue a rate adaptation event responsive to the fill level of at least one FIFO exceeding a threshold, and to execute the rate adaptation event responsive to reading the SKP pulse in every data lane by manipulating the read pointer based on the rate adaptation event.

In some embodiments, a method includes detecting alignment symbols in first-in-first-out buffers (FIFOs) of a plurality of data lanes of a data link and storing FIFO addresses corresponding to locations of alignment symbols in each FIFO. Responsive to alignment symbols being detected in every data lane, read pointer locations of each FIFO are synchronously adjusted to the stored FIFO addresses corresponding to the location of the alignment symbol in the FIFO. The method further includes detecting skip ordered sets (SKPs) in each FIFO, and responsively storing a SKP pulse one address in advance of the SKP in each FIFO, each SKP comprising two or more SKP symbols, monitoring a fill level of each FIFO of the plurality of data lanes, queueing a rate adaptation event responsive to the fill level of at least one FIFO exceeding a threshold, and executing the rate adaptation event responsive to reading the SKP pulse in every data lane, using rate adaptation logic, by manipulating the read pointer based on the rate adaptation event.

In some embodiments, the fill level of the at least one FIFO exceeds a too-full threshold, and the rate adaptation event is a skip event to increment the read pointer of each FIFO of the plurality of data lanes responsive to the read pointer of each FIFO reaching the SKP address to remove a SKP symbol from every data lane. Similarly, the fill level of the at least one FIFO may exceed a too-empty threshold, and the rate adaptation event is a pad event to hold the read pointer of each FIFO of the plurality of data lanes for a clock cycle responsive to the read pointer of each FIFO reaching the SKP address to insert a SKP symbol in every data lane. In some embodiments, the SKP pulse is stored as sideband information in each FIFO.

In some embodiments, synchronously adjusting read pointer locations of each FIFO to the stored FIFO addresses corresponding to the location of the alignment symbol in the FIFO further includes receiving an alignment found signal.

### Multi-Tile Deskewing

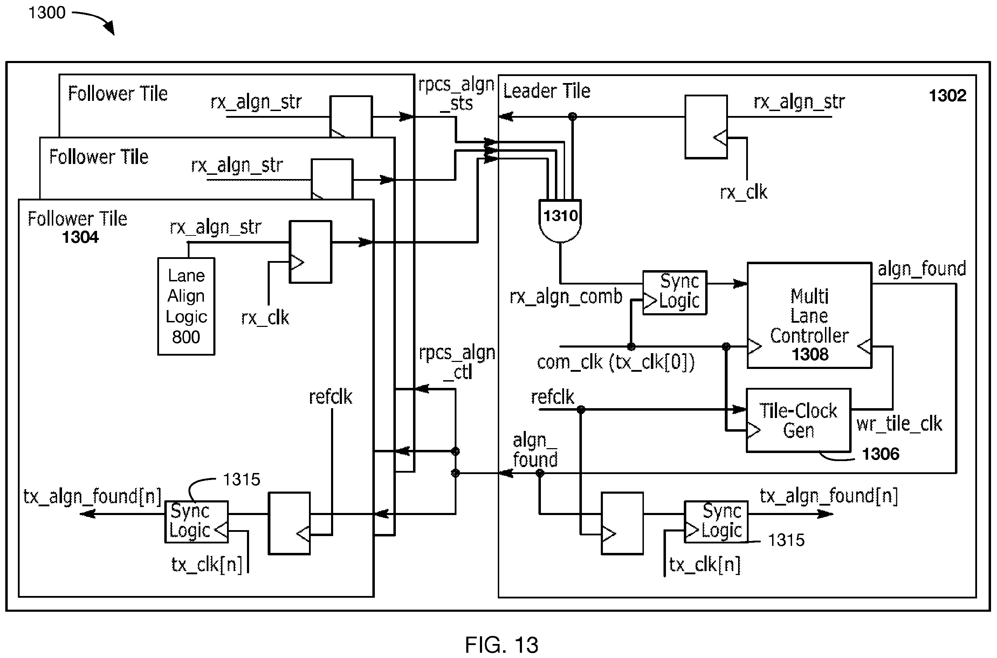

Embodiments described herein provide efficient PCIe retimer circuits that may configure a multi-die package into one of several configurations as previously described. Thus, methods and systems described herein provide solutions for performing both lane deskewing and rate adaptation across multiple tiles depending on configuration, despite constraints such as transmitting signals over slow I/O pads. In a single-die implementation the exchange of deskew information as well as FIFO status information between two or multiple lanes (up to four in a single die implementation) for rate adaptation can be done at maximum speed (1 GHz clock frequency). However, multi-die implementations utilize an alternative approach. In multi-die implementations, deskew and FIFO status/rate adaptation information is exchanged across two or four dies via slow I/O pads. This in turn means that the number of information exchange lines shall be as small as possible. FIG. 13 illustrates an integrated multi-die circuit module that performs multi-tile lane-to-lane deskew by exchanging skew information, in accordance with some embodiments. To minimize the number of connections, some considerations may be taken into account. First, as the bifurcation requirements in multi-tile retimers are limited, the alignment requirements for multi-tile configurations are limited as well. The alignment across several tiles is performed in multiples of four lanes. It is not required to support a bifurcation configuration of 2-4-2 lanes in an 8-lane retimer but only 8, 4-4, 4-2-2 or 2-2-4 (i.e., three times single-die operation) or eight lanes (i.e., 4 lanes distributed over two tiles). Similarly, in a 16-lane retimer, the supported tile-crossing bifurcation modes are 16, 8-8, 8-4-4 and 4-4-8.

As all data lanes of a given tile operate either independently or as a bundle as part of a larger link, the alignment information exchange is one bit per leader-follower tile, per direction. From a follower tile to the leader tile, one bit indicates that there are alignment symbols in the deskewing FIFO in all lanes of the follower tile. In FIG. 13, the signal 'rpcs_algn_sts', RPCS alignment status is the AND-ed alignment of all four lanes of a die (e.g., the output of the AND gate of FIG. 8). In the opposite direction, from leader tile to follower tiles, there is one bit indicating that an alignment symbol has been found in all lanes of the link and that all lanes should set the FIFO read pointer to continue reading from the location where the alignment symbol is stored (signal 'rpcs_algn_ctl', RPCS alignment control). In total this sums up to the following number of interface signals:
- rpcs_algn_sts_o[1:0] (follower out, one combination for 8-lane mode and one for the 16-lane mode)
- rpcs_algn_sts_i[2:0] (leader in)
- rpcs_algn_ctl_o (leader out, distributed to 3 followers)
- rpcs_algn_ctl_i (follower in)

The multi-tile deskewing operation is similar to the single-die mode described above. The method includes detecting an alignment symbol in each data lane in each tile and storing the write pointer position as sideband information. FIG. 13 illustrates an apparatus 1300 for performing lane-to-lane deskew in a chip package containing multiple circuit dies, i.e., tiles. As shown, the apparatus 1300 includes lane alignment logic 800, which may include e.g., symbol detection logic 805 configured to detect alignment symbols in FIFOs of a plurality of data lanes of a plurality of tiles, the plurality of tiles comprising a leader tile 1302 and one or more follower tiles 1304. FIG. 13 illustrates three follower tiles 1304, however such an embodiment should not be considered limiting.

FIG. 13 also includes a write tile clock generator 1306 in the leader tile configured to generate a write tile clock wr_tile_clk from a local system clock tx_clk[0], the write tile clock having a period equal to a period of a common reference clock refclk, the write tile clock corresponding to a pulse having a location within the period of the common reference clock as determined by an active cycle of a counter. In some embodiments, the location of the pulse of the write tile clock is associated with a tile-to-tile propagation time. In some embodiments, the location of the pulse of the write tile clock is programmable via adjustment of the active cycle of the counter.

FIG. 13 also includes a multi-lane controller 1308 in the leader tile configured to determine an alignment symbol has been detected in the FIFO of every lane of every tile, to generate an alignment found signal, and to transmit the alignment found signal to synchronization logic in each of the plurality of tiles responsive to the write tile clock. In embodiments, the multi-lane controller includes a logical AND gate 1310 configured to determine the alignment symbols have been detected in the FIFO of every lane of every tile by performing a logical AND operation on tile-specific alignment found signals rpcs_algn_sts generated by each tile. In some embodiments, the tile-specific alignment found signals are generated using tile-specific logical AND gates in each tile configured to generate the tile-specific alignment found signals by performing a logical AND operation on the lane-specific alignment found signals associated with each data lane on a given tile. Such a tile-specific AND gate 810 is shown in the lane alignment logic 800 of FIG. 8. As shown in FIG. 8, the alignment symbol detection logic 805 is configured to generate each lane-specific alignment found signal as a pulse responsive to detection of the alignment symbol in the data lane. The lane alignment logic 800 further includes pulse stretching logic 815 configured to stretch the pulse for a predetermined number of locally generated receive clock cycles.

As shown in FIG. 13. each tile further includes synchronization logic 1315. In each tile, the synchronization logic 1315 is configured to sample the alignment found signal according to the common reference clock, and to synchronize the alignment found signal to locally generated system clocks tx_clk[n]. An alignment control state machine, e.g., 825 of FIG. 8, in each tile is configured to set read pointers of each FIFO 820 in the tile to a location containing the alignment symbol, and the plurality of FIFOs 820 are configured to output data according to the locally-generated system clocks.

In some embodiments, the lane alignment logic is configured to store the location containing each alignment symbol responsive to detection of each alignment symbol in the FIFOs of the plurality of data lanes. In FIG. 8, the write pointer address 'store_wr_ptr' is stored to indicate the address containing the alignment symbol.
In some embodiments, a maximum skew between the output data from each FIFO according to the locally-generated system clocks is at most one period of the locally-generated system clocks.

In some embodiments, each tile further includes a ring counter 1605 having count values synchronized by the alignment found signal tx_algn_found. In some embodiments, each tile may further include rate adaptation logic 1200, as described above with respect to FIG. 12. The rate adaptation logic 1200 may be configured to monitor a FIFO fill level 'fill_level' of each FIFO of the plurality of data lanes using rate adaptation FSM 1210 and to generate a FIFO fill level status signal 'rpcs_fifo_sts' responsive to the FIFO fill level in one of the FIFOs exceeding a threshold. Skip symbol detection logic 1205 is configured to detect skip ordered sets in the FIFOs of each data lane, and the rate adaptation FSM 1210 pads or truncates skip ordered sets in each FIFO responsive to the FIFO fill level status signal, the padding or truncating performed according to predetermined count values of the ring counter in each tile. In some embodiment, the padding and truncating is performed by not incrementing or double incrementing the read pointer, respectively.

Referring back to FIG. 13, the tile-specific alignment found signals rx_algn_str signal are an AND-ed combination of all stretched lane-specific alignment indications for each data lane belonging to the same link. The combined tile-specific alignment found signal for each follower tile is independently provided to the leader tile. It should be noted that since all of the rpcs_algn_sts signals are output from flip flops and the stretching is sufficient, there is no risk of glitches when performing the AND combination and synchronization.

On the leader tile, the common alignment indication of all tiles (including one from the leader itself) is AND-combined to generate signal 'rx_algn_comb'. If the output is active high, then an alignment symbol is seen in all lanes of all tiles and allows for initiation of the deskew process. Since the combined AND signal is asynchronous, it is first synchronized using a two flip-flop sync logic.

The synchronized common alignment signal indicates that alignment is found in all data lanes and sets the read pointer of the FIFOs of each lane to the position where the alignment symbol was stored. Subsequently, data is read from the FIFO concurrently in all lanes. In Gen-5 mode (32GTps), the FIFO read pointer update happens synchronously at a clock frequency of 1 GHz, and the TX-skew budget allows for uncertainty of one clock cycle. There is no misalignment communication between the tiles after the initial alignment. Lane-to-lane alignment is performed initially at startup, preferably with hysteresis. Furthermore, as no alignment indications are available after the training, there is no alignment lost indication from follower tile to the leader tile.

### Multi- Tile Clocking

One challenge for performing multi-tile lane deskewing is transmitting a 1GHz signal over I/O pads that are capable of handling toggle frequencies of up to 200MHz (corresponding to rise/fall times of ~2.5ns), whereas a toggle frequency of 500 MHz is required (rise/fall times of <1 ns). To work around such a limitation, a tile clocking concept is utilized, as described below. In summary, a balanced, synchronous 100MHz reference clock is distributed from the leader tile to all tiles (leader and follower tiles) which allows for synchronization across all tiles. Both the leader tile and follower tiles set the read pointer of the FIFO according to the location identified by the corresponding stored write pointer and generate a local 1GHz clock tx_clk[n] based on the common 100MHz reference clock.

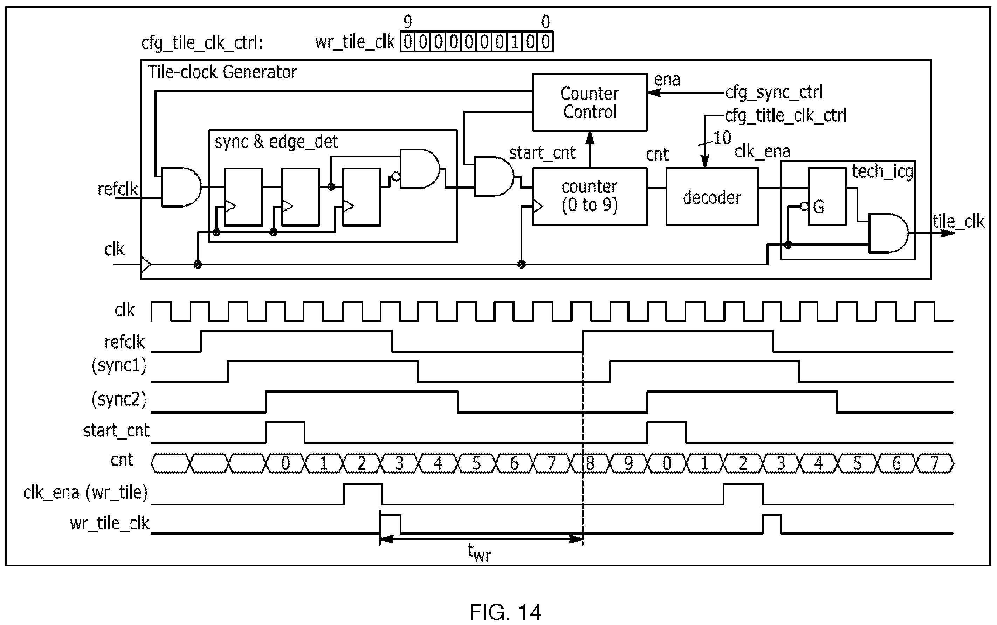

The clocking mechanism showing the clock domain crossing scheme is shown in the bottom of FIG. 13. The leader tile contains a locally-generated 1GHz-based write tile clock 'wr_tile_clk' which is active one cycler per 10ns, thus matching the period of the 100MHz reference clock. Outbound alignment control signals (e.g., algn_found) are clocked with the write tile clock, and subsequently sampled on each leader and follower tile by the synchronous common 100 MHz reference clock. With an appropriate timing of the write tile clock, this allows for a setup time (t_{wr} in the timing diagram of FIG. 14) from write tile clock-to-reference clock of more than 4ns, which is enough time to cross the path from one tile to another tile via the IO pads and substrate routing. After the refclk-clocked flip-flop, there is a synchronize stage which synchronizes the alignment found signal to the locally generated 1GHz lane-based tx_clk.

The write tile clock is generated in a tile-clock generator. FIG. 14 illustrates logic and timing diagrams of such a tile-clock generator. The write tile clock is synchronous to the reference clock, and for this purpose the reference clock is synchronized with a 1 GHz working clock. The rising edge triggers a counter from 0 to 9. A programmable decoder allows for a sequence which is active for one arbitrarily selected cycle (i.e., counter value). The active cycle is used to create a gated clock based on the 1 GHz working clock resulting in a tile clock which is active one out of 10 cycles.

The upper part of the timing diagram of FIG. 14 shows the synchronization of the reference clock and the generation of the enable pulse for the gate clock, the write tile clock. t_{wr} is the time between the generating clock on the leader tile and the 100MHz sampling clock refclk on the follower tile. The time t_{wr} is programmable, and based on timing constraints, should be more than 4 ns. In some embodiments, t_{wr} is programmed based on setup and/or hold requirements and may be adjusted by selecting one of the values for the counter for which wr_tile_clk is active. For example, if the value of '0' is chosen, the setup time is increased (at the cost of lowering the hold time before the next cycle), while if a value of '4' is chosen, the setup time is decreased (thereby increasing the hold time (before the next cycle). The source for the write tile clock is a common 1 GHz clock on the leader tile, e.g., tx_clk[0] (PHY transmit clock lane 0).

Since all 'algn_found' signals are synchronized to the common 100MHz reference clock and to the lane based transmit clock tx_clk[n] individually, there may be an uncertainty of at most a single 1 GHz clock cycle (1 ns), which fits very well within the required skew tolerance of 1.25 ns for the Gen-5 mode.

Looking at the schematic in FIG. 14 there is an additional counter control logic. This logic serves at least two purposes: (i) it allows disablement of the refclk synchronizer stage when it is not used to increase lifetime and (ii) it allows disablement of restarting the counter. The counter control unit observes the start_cnt pulse from time to time checking for drift.

In the above multi-tile deskew algorithms, the following factors may be taken into consideration regarding latency:
- rx_algn_str transmitted from follower tile to leader tile;
- synchronization of the combined rx_algn_comb signal
- synchronizing the sync'ed signal with wr_tile_clk;
- transmitting the resulting algn_found signal from leader to follower tile and
- sampling the algn_found signal with refclk and then with rd_tile_clk

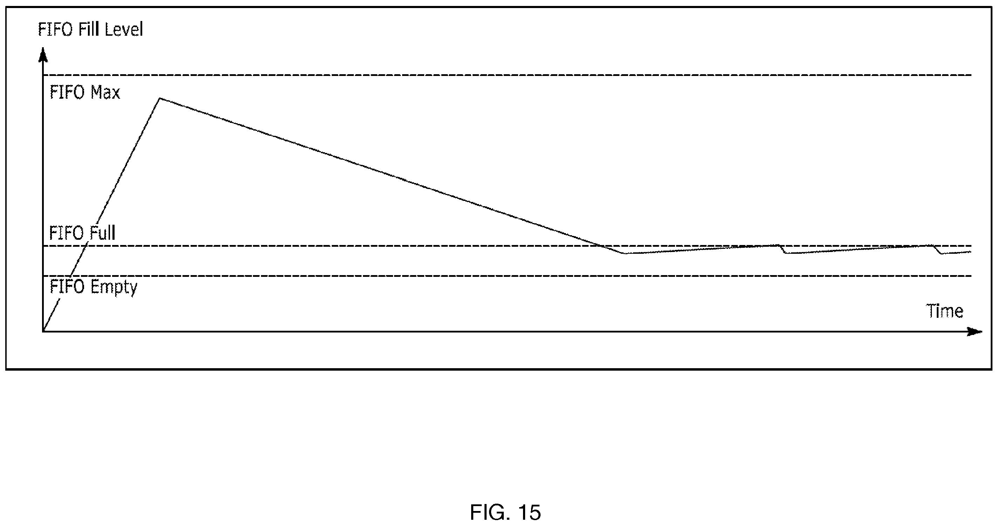

In total, the above delay sums up to about 20 to 25 ns compared to the single-die alignment where the delay is about 7 to 12 ns. The delay can be reduced to 5 to 12 ns using rate adaptation by adjusting the fill level of the FIFO, as described in more detail below. When the targeted FIFO fill level is set to a minimum value, the skip (SKP) ordered set will be taken out of the data stream resulting in a lower latency. A sketch showing the FIFO fill level, which directly relates to the latency, is shown in FIG. 15. The FIFO depth is appropriately sized, i.e., the minimum depth is at least 32 words, and the use of a dual-port SRAM based FIFO is taken into account to minimize area. For example, a flop-based FIFO requires 32 bits * 32 depth * 4 lanes = 4096 flops per tile.

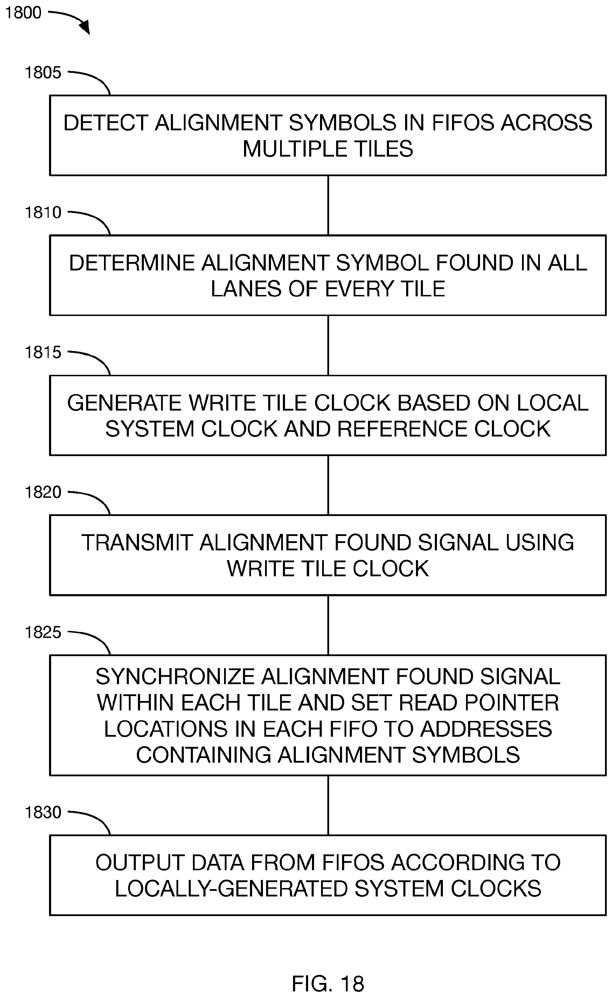

FIG. 18 is a flowchart of a method 1800, in accordance with embodiments. As shown, method 1800 includes detecting 1805 alignment symbols in FIFOs of a plurality of data lanes of a plurality of tiles, the plurality of tiles comprising a leader tile and one or more follower tiles. The method further includes determining 1810 an alignment symbol has been detected in the FIFO of every lane of every tile, and responsively generating an alignment found signal. The method further includes generating 1805 a write tile clock from a local system clock, the write tile clock having a period equal to a period of a common reference clock, the write tile clock corresponding to a pulse having a location within the period of the common reference clock as determined by an active cycle of a counter. The method further includes transmitting 1820 the alignment found signal to synchronization logic in each of the follower tiles responsive to the write tile clock. The method further includes sampling the alignment found signal using the synchronization logic within each follower tile and the leader tile according to the common reference clock to synchronize 1825 the alignment found signal to locally-generated system clocks for each tile of the plurality of tiles, and responsively setting a read pointer of the FIFO to a location containing the alignment symbol. The method further includes outputting 1830 data from each FIFO according to the locally-generated system clocks.

### Multi-Tile Rate Adaptation

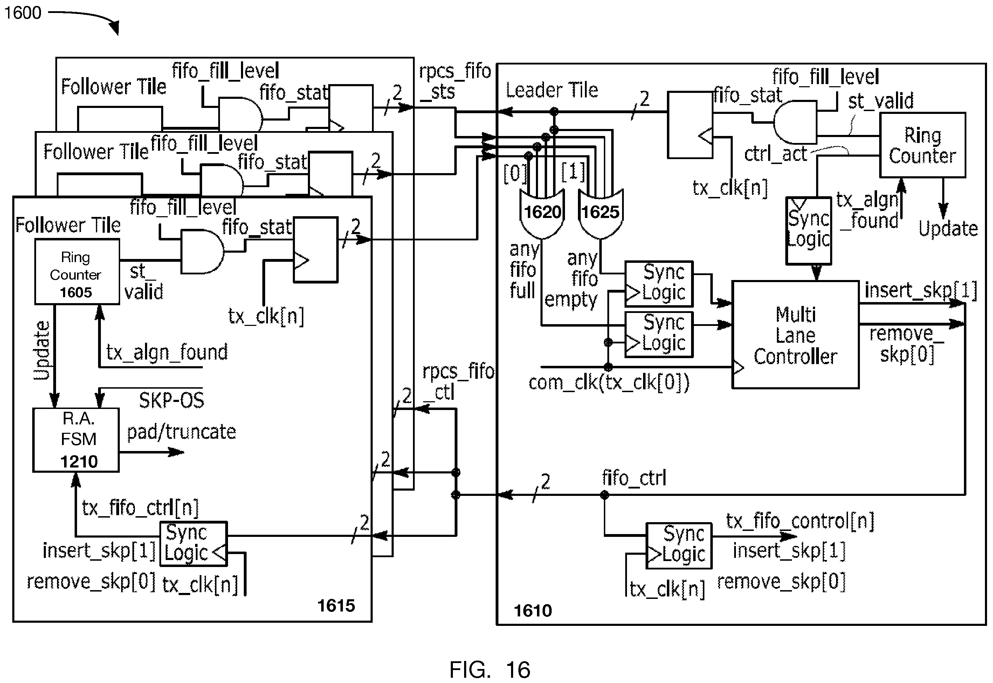

FIG. 16 is a block diagram illustrating information exchange for multi-tile rate adaptation, in accordance with some embodiments. The information to be exchanged includes two bits in each direction: two bits indicate the FIFO fill level (status), and two bits indicate the derived FIFO adjustment action (control). Each tile observes the FIFO levels of all lanes belonging to the link. If any FIFO indicates FIFO full, the tile reports FIFO full to the leader tile. Similarly, if any lane-FIFO of the link indicates FIFO empty, the tile reports FIFO empty to the leader. For the case that one FIFO indicates full whereas another FIFO indicates empty is an error condition and is reported to the leader tile.

As shown in FIG. 16, an apparatus 1600 for performing multi -tile rate adaptation includes a plurality of ring counters 1605, each ring counter contained within a respective tile of a multi-tile package, the plurality of ring counters configured to incrementally output a synchronization pulse. As shown in FIG. 16, the multi-tile package includes one leader tile 1610 and three follower tiles 1615. without implying limitation. The leader tile 1610 in the multi-tile package is configured to synchronize the synchronization pulses and count values of the plurality of ring counters 1605 according to an alignment found signal 'tx_algn_found'. As described above, the alignment found signal is generated according to the write tile clock described above and is synchronized into each tile according to the common reference clock and is thus skewed between tiles by no more than a single clock pulse of the locally generated system clocks.

FIFO fill level detection logic in the leader tile is configured to detect, after a first synchronization pulse, a FIFO fill level of a FIFO in a given tile of the multi-tile package has exceeded a threshold, and to output a rate adaptation control signal 'rpcs_fifo_ctl' to each tile of the multi-tile package. As shown in FIG. 16, the FIFO fill level detection logic in the leader tile includes two OR gates, OR gate 1620 configured to detect one lane's FIFO is full, and OR gate 1625 configured to detect one lane's FIFO is empty. Each tile includes a rate adaptation FSM 1210 configured to modify, after a subsequent synchronization pulse, a read pointer in each FIFO based on the rate adaptation control signal to pad or truncate a stored skip symbol depending on the rate adaptation control signal.

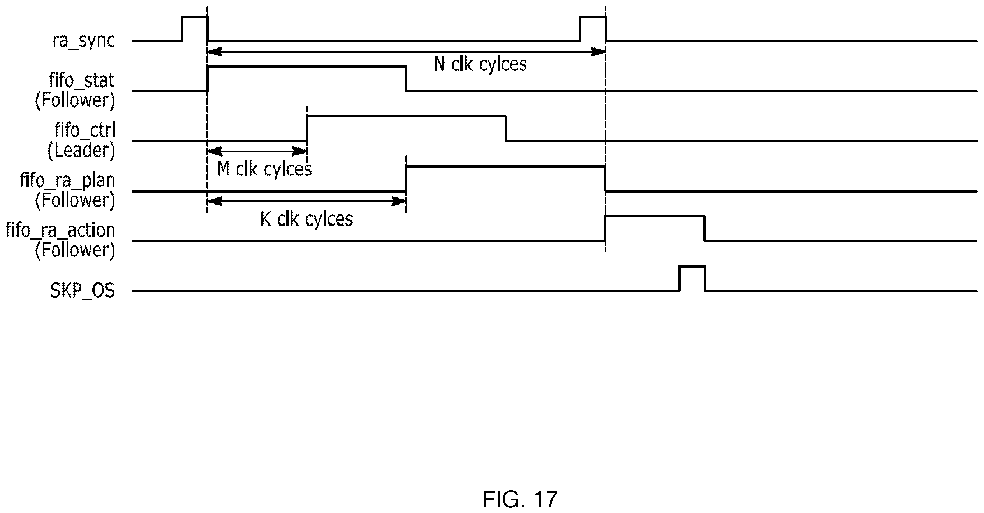

The information exchange is described as follows, and an accompanying timing diagram is shown in FIG. 17. A synchronous ring counter in each tile is permanently incrementing after initiation by the alignment control signal. In doing so, the counters of all lanes run the same, with at most one clock cycle shift between the tiles. All rate adaptation activities are synchronized to this counter, as described in more detail below. Multi-tile rate adaptation takes advantage of the multi-tile lane deskewing described above by synchronizing the counters according to the alignment found signal tx_algn_found generated during lane deskewing.

The ring counter counts from 0 to N-l, where N is programmable. Assuming N = 16, the counter repeats every 16 clock cycles. The ring counters are effectively counting clock cycles, and logic is programmed to take various actions at specific count values of the ring counters. The ring counter in each lane of each tile is initialized with the alignment pulse, as previously discussed with regards to multi-tile deskewing. In the timing diagram of FIG. 17, the signal ra_sync is the alignment pulse. As the counters of each tile have been synchronized according to the tx_algn_found signal, the ring counters of each tile generate a synchronization pulse within a single 1 GHz system clock cycle time frame. When a FIFO becomes full or empty, this can be signaled to the leader file which is only synchronized with the ring counter. A FIFO level status signal fifo_stat is sent to the leader for a certain time, e.g., N/2 = 8 cycles, which is more than sufficient for the signal to transition from the follower tile to the leader tile.

On the leader tile the FIFO status signals are sync'ed using tech_sync2 cells and are observed after a couple of cycles. On the leader tile, the FIFO level is evaluated after M clock cycles from the synchronization pulse. M is programmable, and in the timing diagram of FIG. 17, M = 4. When programming M, the tile-to-tile transport delay and the synchronization delay are taken into account. A suitable control signal fifo_ctrl is generated: either 'pad' (insert a skip) or 'drop' (remove a skip). The control signal is stretched for a programmable number of clock cycles to allow for synchronization in the follower tiles. This signal is forwarded back to all follower tiles. As shown in FIG. 16, the multi-lane controller may receive the ctrl_act signal from the ring counter in the leader tile, which may correspond to the count value used to initiate the next action in the sequence of action as laid out in FIG. 17.

In all follower tiles the information is synchronized using tech_sync2 cells and evaluated after K clock cycles from the synchronization pulse. K is programmable as well and is selected to accommodate for tile-to-tile transport delay and synchronization delay. In the timing diagram of FIG. 17, the resulting control signal is fifo_ra_plan ('plan' for planned rate adaptation). This signal becomes stable before the next synchronization pulse (ra_sync) from the ring counter. The control logic waits for the next synchronization pulse from the ring counter, e.g., when at N-l or 0, and activates the pad and truncate logic itself. In the timing diagram of FIG. 17, this is signal fifo_ra_action (rate adaptation active). Since the ring counter operates synchronously to the data stream in all tiles responsive to the tx_algn_found signal from deskewing, any clock skew is automatically compensated. With the occurrence of the next skip ordered set (SKP-OS in the timing diagram of FIG. 17), rate adaption takes place. The distance (i.e., counted number of clock cycles) between the skip ordered set and the synchronization pulse is identical in all tiles and means that a skip removal or a skip insertion is done in all tiles concurrently. If the SKP-OS is to be truncated, then the control logic may double-increment the read pointer for one clock cycle, effectively skipping over the location of the SKP-OS. If a SKP-OS is to be padded, then the control logic may not increment the read pointer for one clock cycle, thus effectively reading the SKP-OS twice.

In the above explanation the ring counter end value (N) becomes clear. N is programmed to be large enough to allow for the complete round-trip, i.e., all tile-to-tile transition delays and synchronization uncertainties are accounted for. A repetitive FIFO-full or FIFO-empty indication is not problematic. Two possible solutions are given below.

When fifo_ra_action is already active, it is kept active. But when the opposite action is requested (e.g., fifo empty after initial fifo full indication), fifo_ra_action may become inactive again. In one scenario, fifo_ra_action stays active until a skip ordered set is present to perform the rate adaptation. When fifo_ra_action is already active, the control logic has requested a rate adaptation operation. If the FIFO level changes further (e.g., due to a missing skip ordered set during long packet transfers), a second or third rate adaptation request can be issued. The request is processed as before and then the pad-and truncate-control logic may store these requests in addition. When, after some time, one or several skip ordered sets come in, several rate adaptation steps can be executed one after the other without further interaction.

For multi -tile rate adaptation, the following signals are used:
- rpcs_fifo_sts_o[l:0][l:0] (follower out, one combination for 8-lane mode and one for the 16-lane mode)
- rpcs_fifo_sts_i [2:0] [1:0] (leader in)
- rpcs_fifo ct_i[1:0] (follower in)

The status information uses the following encoding:
- 2'b 00: All FIFO of follower are within limits (no action required)
- 2'b 01: Any FIFO of follower is full (request SKP removal)
- 2'b 10: Ay FIFO of follower is empty (request SKP insertion)
- 2'b 11: Errors condition, FIFO behaves unexpectedly, inform leader

The control information uses the following encoding:
- 2'b 00: No action required, keep FIFO unchanged
- 2'b 01: Remove one SKP ordered set from data stream
- 2'b 10: Insert one SKP ordered set into the data stream
- 2'b 11 : Error indication, insert ERROR ordered sets into the data stream

Since the multi-lane rate adaptation utilizes the same synchronization concept as for the alignment information exchange, i.e., using reference clock and write tile clocks, there is no need to use Gray-encoding. One challenge may be long tumaround times. When a FIFO is full or empty, a request to either insert or remove a SKP ordered set response will come quickly. However, it takes time until the next SKP ordered set occurs. First when a SKP ordered set was processed (insertion or removal), the FIFO fill level is updated, while in the meantime the Multi-Lane Controller block may have already issued the next FIFO control request, leading to an unintended additional SKP insertion or removal. One possible solution for this issue is to change the FIFO level indication as soon as a FIFO level change control request arrives and update the FIFO level again first after the change request was executed. When a FIFO becomes full or empty, this information is forwarded to the leader tile via the 'rpcs_fifo_sts' lines. The leader tile in turn will issue an "insert_skp" request or a "remove_skp" request. Simultaneously the leader tile will internally block any FIFO full or empty indication from follower tiles for N clock cycles, where N is programmable. This blocks unintended subsequent FIFO change requests until the actual request is processed. The FIFO change request is synchronized and forwarded to all follower tiles via the 'rpcs_fifo_ctl' lines. The addressed FIFO controller (in each lane individually) will store the request and change the FIFO fill level indications to "normal" until the request can be eventually processed. As soon as a SKP ordered set is detected, the FIFO update request can be executed, and either a SKP is inserted or a SKP is removed. After the request is processed, the FIFO fill level is updated. In case the FIFO level still differs from "normal" the FIFO fill status will be sent to the leader tile via 'rpcs_fifo_sts' lines again.

In some embodiments, a method includes detecting skip ordered sets in a plurality of data lanes, and responsively storing a skip pulse responsive to each detected skip ordered set in a corresponding FIFO location associated with each data lane. The method further includes synchronously initiating ring counters in each tile of a multi-tile package responsive to an alignment found signal, each ring counter synchronously maintaining count values and periodically outputting synchronization pulses. As described above, the alignment found signal is generated according to the write tile clock described above, and is synchronized into each tile according to the common reference clock and is thus skewed between tiles by no more than a single clock pulse of the locally generated system clocks.

Responsive to a first synchronization pulse, the fill levels of each FIFO in the multi-tile package are monitored according to a predetermined count value in the ring counters by monitoring a status signal using logic in a leader tile, and responsively outputting a rate adaptation control signal responsive to determining the fill level for a FIFO in a given tile of the multi-tile package exceeds a threshold. The rate adaptation control signal is evaluated via respective logic within the tiles of the multi-tile package after a second predetermined count value is reached in each ring counter, and responsive to second synchronization pulse, rate adaptation logic is initiated to perform an action on SKP ordered sets within the FIFOs of each tile based on the rate adaptation control signal.

### Skew Budget

The PCIe base specification for retimers differentiates between lane-to-lane input skew, which must be compensated for, and lane-to-lane output skew, which is permitted. The input and output skews are data-rate dependent.

### Input (RX) Skew

The input skew requirements are listed below in Table I. When converting the time/UI requirements into clock cycle equivalents, the deskew requirements can be extracted. Deskewing logic looks back in memory or stores enough data allowing to read from all lanes in a deskewed manner. This delays the quickest lane compared to the slowest lane and results in an increase of latency. The number of required clock cycles for this is listed in column "Deskew requirem(ents)". Three additional clock cycles are required for synchronizing deskew and rate adaptation information from all (asynchronous) lanes (column "CDC-Overhead"). This results in the Deskew Budget listed on the right column.

### Input Skew

**Table I: Input (Rx) Skew Requirements**

| **Data rate** | **UI** | **i/f width** | **f** | **T** | **Input- Skew (spec)** | | **Input-Skew** | **Deskew requirem.** | **CDC-Overhead** | **Deskew Budget** |
|---|---|---|---|---|---|---|---|---|---|---|
| | **ns** | **bit** | **Mhz** | **ns** | **ns** | **UI** | **# Clk Cyc** | **# Clk Cyc** | **# Clk Cyc** | **# Clk Cyc** |
| 2.5GT/s | 0.4 | 10 | 250 | 4 | 20 | 50 | 5 | 5 | 3 | 8 |
| | | 20 | 125 | 8 | 20 | 50 | 2.5 | 3 | 3 | 6 |
| 5GT/s | 0.2 | 10 | 500 | 2 | 8 | 40 | 4 | 4 | 3 | 7 |
| | | 20 | 250 | 4 | 8 | 40 | 2 | 2 | 3 | 5 |
| 8GT/s | 0.125 | 16 | 500 | 2 | 6 | 48 | 3 | 3 | 3 | 6 |
| | | 32 | 250 | 4 | 6 | 48 | 1.5 | 2 | 3 | 5 |
| 16GT/s | 0.063 | 16 | 1000 | 1 | 5 | 80 | 5 | 5 | 3 | 8 |
| | | 32 | 500 | 2 | 5 | 80 | 2.5 | 3 | 3 | 6 |

### Output (TX) Skew

The output skew requirements are given below in Table II. The skew numbers are given in ns in the PCIe base specification and converted into unit intervals and into number of clock cycles (right column). Having an output-skew of more than one clock cycle (16/32 GTps) means that the clock synchronization requirements are easier to maintain: An uncertainty of one clock cycle between the lanes on multiple dies is acceptable. The output-skew in the low data rate modes is more difficult to maintain, and proper synchronization may be required. But since the clock frequency is 500 MHz and below, a synchronization to a 1 GHz clock (i.e. +/- 1 GHz clock cycle) is sufficient to meet the PCIe output skew requirements.

### Output Skew

**Table II: Output (TX) Skew Requirements**

| **Datarate** | **UI** | **i/f width** | **f** | **T** | **Ouput-Skew (spec)** | | **ouput- Skew** |
|---|---|---|---|---|---|---|---|
| | **[ns]** | **[bit]** | **[MHz]** | **[ns]** | **[ns]** | **[UI]** | **[# Clk Cyc]** |
| 2.5GT/s | 0.4 | 10 | 250 | 4 | 2.5 | 6.25 | 0.625 |
| | | 20 | 125 | 8 | 2.5 | 6.25 | 0.3125 |
| 5GT/s | 0.2 | 10 | 500 | 2 | 2 | 10 | 1 |
| | | 20 | 250 | 4 | 2 | 10 | 0.5 |
| 8GT/s | 0.125 | 16 | 500 | 2 | 1.5 | 12 | 0.75 |
| | | 32 | 250 | 4 | 1.5 | 12 | 0.375 |
| 16GT/s | 0.063 | 16 | 1000 | 1 | 1.25 | 20 | 1.25 |
| | | 32 | 500 | 2 | 1.25 | 20 | 0.625 |
| 32GT/s | 0.0313 | 32 | 1000 | 1 | 1.25 | 40 | 1.25 |

## Claims

1. A method comprising:
detecting (1805) alignment symbols in FIFOs of a plurality of data lanes of a plurality of tiles, the plurality of tiles comprising a leader tile and one or more follower tiles;
determining (1810), by a multi-lane controller of the leader tile, that an alignment symbol has been detected in the FIFO of every lane of every tile by performing a logical AND operation on tile-specific alignment found signals generated by each tile, and responsively generating an alignment found signal;
generating (1815), by a write tile clock generator in the leader tile, a write tile clock from a local system clock, the write tile clock having a period equal to a period of a common reference clock, the write tile clock corresponding to a pulse having a location within the period of the common reference clock as determined by an active cycle of a counter;
transmitting (1820) the alignment found signal to synchronization logic in each of the follower tiles responsive to the write tile clock;
sampling the alignment found signal using the synchronization logic within each follower tile and the leader tile according to the common reference clock;
synchronizing (1825) the alignment found signal to locally-generated system clocks for each tile of the plurality of tiles, and responsively setting a read pointer of the FIFO to a location containing the alignment symbol; and
outputting (1830) data from each FIFO according to the locally-generated system clocks.

2. The method of claim 1, further comprising storing the location containing each alignment symbol responsive to detection of each alignment symbol in the FIFOs of the plurality of data lanes.; OR
wherein the location of the pulse of the write tile clock is associated with a tile-to-tile propagation time; OR.
wherein the location of the pulse of the write tile clock is programmable via adjustment of the active cycle of the counter; OR.
wherein a maximum skew between the data output from each FIFO according to the locally-generated system clocks is at most one period of the locally-generated system clocks.

3. The method of claim 1, further comprising generating the tile-specific alignment found signals by performing a logical AND operation on lane-specific alignment found signals associated with each data lane on a given tile.

4. The method of claim 3, wherein each lane-specific alignment found signal corresponds to a pulse generated responsive to detection of the alignment symbol in the data lane, the pulse stretched for a predetermined number of locally-generated receive clock cycles.

5. The method of claim 1, further comprising synchronizing count values of a plurality of ring counters, each tile having a corresponding one of the plurality of ring counters.

6. The method of claim 5, further comprising:
monitoring a FIFO fill level of each FIFO of the plurality of data lanes;
generating a FIFO fill level status signal responsive to the FIFO fill level in one of the FIFOs exceeding a threshold;
detecting skip ordered sets in the FIFOs of each data lane; and
padding or truncating skip ordered sets in each FIFO responsive to the FIFO fill level status signal, the padding or truncating performed according to predetermined count values of the ring counter in each tile.

7. An apparatus comprising:
alignment symbol detection logic (805) configured to detect alignment symbols in FIFOs of a plurality of data lanes of a plurality of tiles, the plurality of tiles comprising a leader tile and one or more follower tiles;
a write tile clock generator (1306) in the leader tile (1302) configured to generate a write tile clock from a local system clock, the write tile clock having a period equal to a period of a common reference clock, the write tile clock corresponding to a pulse having a location within the period of the common reference clock as determined by an active cycle of a counter;
a multi-lane controller in the leader tile configured to determine an alignment symbol has been detected in the FIFO of every lane of every tile by performing a logical AND operation (1310) on tile-specific alignment found signals generated by each tile, to generate an alignment found signal, and to transmit the alignment found signal to synchronization logic in each of the plurality of tiles responsive to the write tile clock;
the synchronization logic in each follower tile (1304) configured to sample the alignment found signal according to the common reference clock, and to synchronize the alignment found signal to locally-generated system clocks for each tile of the plurality of tiles;
an alignment control state machine (825) in each tile configured to set read pointers of each FIFOs in the tile to a location containing the alignment symbol; and
the plurality of FIFOs configured to output data according to the locally-generated system clocks.

8. The apparatus of claim 7, wherein the location containing each alignment symbol is stored responsive to detection of each alignment symbol in the FIFOs of the plurality of data lanes.

9. The apparatus of claim 7, wherein the location of the pulse of the write tile clock is associated with a tile-to-tile propagation time; OR
wherein the location of the pulse of the write tile clock is programmable via adjustment of the active cycle of the counter; OR
wherein a maximum skew between the output data from each FIFO according to the locally-generated system clocks is at most one period of the locally-generated system clocks.

10. The apparatus of claim 8, further comprising tile-specific logical AND gates in each tile configured to generate the tile-specific alignment found signals by performing a logical AND operation on the lane-specific alignment found signals associated with each data lane on a given tile.

11. The apparatus of claim 10, wherein the alignment symbol detection logic is configured to generate each lane-specific alignment found signal as a pulse generated responsive to detection of the alignment symbol in the data lane, and wherein each data lane comprises pulse stretching logic configured to stretch the pulse for a predetermined number of locally-generated receive clock cycles.

12. The apparatus of claim 7, further comprising a ring counter in each tile having count values synchronized by the alignment found signal.

13. The apparatus of claim 12, further comprising:
skip symbol detection logic configured to detect skip ordered sets in the FIFOs of each data lane;
a rate adaptation finite state machine, FSM, configured to monitor a FIFO fill level of each FIFO of the plurality of data lanes and to generate a FIFO fill level status signal responsive to the FIFO fill level in one of the FIFOs exceeding a threshold, and to pad or truncate skip ordered sets in each FIFO responsive to the FIFO fill level status signal, the padding or truncating performed according to predetermined count values of the ring counter in each tile.

## Patentansprüche

1. Verfahren, umfassend:
Erfassen (1805) von Ausrichtungssymbolen in FIFOs einer Vielzahl von Datenspuren einer Vielzahl von Kacheln, wobei die Vielzahl von Kacheln eine Führungskachel und eine oder mehrere Folgekacheln umfasst;
Bestimmen (1810), durch eine Mehrspursteuerung der Führungskachel, dass ein Ausrichtungssymbol im FIFO jeder Spur jeder Kachel detektiert wurde, durch Ausführen einer logischen UND-Operation an kachelspezifischen Ausrichtung-gefunden-Signalen, die von jeder Kachel erzeugt werden, und darauf ansprechendes Erzeugen eines Ausrichtung-gefunden-Signals;
Erzeugen (1815), durch einen Schreib-Kachel-Taktgenerator in der Führungskachel, eines Schreib-Kachel-Takts aus einem lokalen Systemtakt, wobei der Schreib-Kachel-Takt eine Periode aufweist, die gleich einer Periode eines gemeinsamen Referenztakts ist, wobei der Schreib-Kachel-Takt einem Impuls entspricht, der eine Position innerhalb der Periode des gemeinsamen Referenztakts aufweist, die durch einen aktiven Zyklus eines Zählers bestimmt wird;
Übertragen (1820) des Ausrichtung-gefunden-Signals an die Synchronisationslogik in jeder der Folgekacheln als Reaktion auf den Schreib-Kachel-Takt;
Abtasten des Ausrichtung-gefunden-Signals unter Verwendung der Synchronisationslogik innerhalb jeder Folgekachel und der Führungskachel gemäß dem gemeinsamen Referenztakt;
Synchronisieren (1825) des Ausrichtung-gefunden-Signals mit lokal erzeugten Systemtakten für jede Kachel der Vielzahl von Kacheln und als Reaktion darauf Einstellen eines Lesezeigers des FIFO auf eine Position, die das Ausrichtungssymbol enthält; und
Ausgeben (1830) von Daten aus jedem FIFO gemäß den lokal erzeugten Systemtakten.

2. Verfahren nach Anspruch 1, ferner umfassend das Speichern der Position, die jedes Ausrichtungssymbol enthält, als Reaktion auf das Erfassen jedes Ausrichtungssymbols in den FIFOs der Vielzahl von Datenspuren; ODER
wobei die Position des Impulses des Schreib-Kachel-Taktes mit einer Kachel-zu-Kachel-Ausbreitungszeit verknüpft ist; ODER.
wobei die Position des Impulses des Schreib-Kachel-Taktes durch Anpassung des aktiven Zyklus des Zählers programmierbar ist; ODER.
wobei ein maximaler Versatz zwischen den aus jedem FIFO gemäß den lokal erzeugten Systemtakten ausgegebenen Daten höchstens eine Periode der lokal erzeugten Systemtakte beträgt.

3. Verfahren nach Anspruch 1, ferner umfassend das Erzeugen der kachelspezifischen Ausrichtung-gefunden-Signale durch Durchführen einer logischen UND-Verknüpfung an spurspezifischen Ausrichtung-gefunden-Signalen, die jeder Datenspur auf einer bestimmten Kachel zugeordnet sind.

4. Verfahren nach Anspruch 3, wobei jedes spurspezifische Ausrichtung-gefunden-Signal einem Impuls entspricht, der als Reaktion auf die Erfassung des Ausrichtungssymbols in der Datenspur erzeugt wird, wobei der Impuls für eine vorbestimmte Anzahl von lokal erzeugten Empfangstaktzyklen gestreckt wird.

5. Verfahren nach Anspruch 1, ferner umfassend das Synchronisieren von Zählwerten einer Vielzahl von Ringzählern, wobei jede Kachel einen entsprechenden der Vielzahl von Ringzählern aufweist.

6. Verfahren nach Anspruch 5, ferner umfassend:
Überwachen eines FIFO-Füllstands jedes FIFO der Vielzahl von Datenspuren;
Erzeugen eines FIFO-Füllstandsstatussignals als Reaktion darauf, dass der FIFO-Füllstand in einem der FIFOs einen Schwellenwert überschreitet;
Erfassen von skip-ordered Sätzen in den FIFOs jeder Datenspur; und
Auffüllen oder Verkürzen von skip-ordered Sätzen in jedem FIFO als Reaktion auf das FIFO-Füllstandsstatussignal, wobei das Auffüllen oder Verkürzen gemäß vorbestimmten Zählwerten des Ringzählers in jeder Kachel durchgeführt wird.

7. Einrichtung, umfassend:
Ausrichtungssymbolerfassungslogik (805), die konfiguriert ist, um Ausrichtungssymbole in FIFOs einer Vielzahl von Datenspuren einer Vielzahl von Kacheln zu erfassen, wobei die Vielzahl von Kacheln eine Führungskachel und eine oder mehrere Folgekacheln umfasst;
einen Schreib-Kachel-Taktgenerator (1306) in der Führungskachel (1302), der konfiguriert ist, um einen Schreib-Kachel-Takt aus einem lokalen Systemtakt zu erzeugen, wobei der Schreib-Kachel-Takt eine Periode aufweist, die gleich einer Periode eines gemeinsamen Referenztakts ist, wobei der Schreib-Kachel-Takt einem Impuls entspricht, der eine Position innerhalb der Periode des gemeinsamen Referenztakts aufweist, wie durch einen aktiven Zyklus eines Zählers bestimmt;
eine Mehrspursteuerung in der Führungskachel, die konfiguriert ist, um zu bestimmen, dass ein Ausrichtungssymbol im FIFO jeder Spur jeder Kachel erfasst wurde, indem eine logische UND-Operation (1310) an durch jede Kachel erzeugten, kachelspezifischen Ausrichtung-gefunden-Signalen durchgeführt wird, um ein Ausrichtung-gefunden-Signal zu erzeugen, und um das Ausrichtung-gefunden-Signal als Reaktion auf den Schreib-Kachel-Takt an eine Synchronisationslogik in jeder der Vielzahl von Kacheln zu übertragen;
die Synchronisationslogik in jeder Folgekachel (1304), die konfiguriert ist, um das Ausrichtung-gefunden-Signal gemäß dem gemeinsamen Referenztakt abzutasten und das Ausrichtung-gefunden-Signal auf lokal erzeugte Systemtakte für jede Kachel der Vielzahl von Kacheln zu synchronisieren;
einen Ausrichtungssteuerzustandsautomaten (825) in jeder Kachel, der konfiguriert ist, um Lesezeiger jedes FIFOs in der Kachel auf eine Position zu setzen, die das Ausrichtungssymbol enthält; und
die Vielzahl von FIFOs, die konfiguriert sind, um Daten gemäß den lokal erzeugten Systemtakten auszugeben.

8. Einrichtung nach Anspruch 7, wobei die Position, die jedes Ausrichtungssymbol enthält, als Reaktion auf die Erfassung jedes Ausrichtungssymbols in den FIFOs der Vielzahl von Datenspuren gespeichert wird.

9. Vorrichtung nach Anspruch 7, wobei die Position des Impulses des Schreib-Kachel-Taktes mit einer Kachel-zu-Kachel-Ausbreitungszeit verknüpft ist; ODER
wobei die Position des Impulses des Schreib-Kachel-Taktes durch Anpassung des aktiven Zyklus des Zählers programmierbar ist; ODER
wobei ein maximaler Versatz zwischen den Ausgangsdaten von jedem FIFO gemäß den lokal erzeugten Systemtakten höchstens eine Periode der lokal erzeugten Systemtakte beträgt.

10. Einrichtung nach Anspruch 8, ferner umfassend kachelspezifische logische UND-Gatter in jeder Kachel, die konfiguriert sind, um die kachelspezifischen Ausrichtung-gefunden-Signale durch Ausführen einer logischen UND-Operation an den spurspezifischen Ausrichtung-gefunden-Signalen, die jeder Datenspur auf einer bestimmten Kachel zugeordnet sind, zu erzeugen.

11. Einrichtung nach Anspruch 10, wobei die Ausrichtungssymbolerfassungslogik konfiguriert ist, um jedes spurspezifische Ausrichtung-gefunden-Signal als einen Impuls zu erzeugen, der als Reaktion auf die Erfassung des Ausrichtungssymbols in der Datenspur erzeugt wird, und wobei jede Datenspur eine Impulsdehnungslogik umfasst, die konfiguriert ist, um den Impuls für eine vorbestimmte Anzahl von lokal erzeugten Empfangstaktzyklen zu dehnen.

12. Einrichtung nach Anspruch 7, ferner umfassend einen Ringzähler in jeder Kachel mit Zählwerten, die durch das Ausrichtung-gefunden-Signal synchronisiert sind.

13. Einrichtung nach Anspruch 12, ferner umfassend:
Skip-Symbol-Erfassungslogik, die konfiguriert ist, um skip-ordered Sätze in den FIFOs jeder Datenspur zu erfassen;
einen Ratenanpassungsendzustandsautomaten, FSM, der konfiguriert ist, um einen FIFO-Füllstand jedes FIFO der Vielzahl von Datenspuren zu überwachen und ein FIFO-Füllstandsstatussignal als Reaktion darauf zu erzeugen, dass der FIFO-Füllstand in einem der FIFOs einen Schwellenwert überschreitet, und skip-ordered Sätze in jedem FIFO als Reaktion auf das FIFO-Füllstandsstatussignal aufzufüllen oder zu verkürzen, wobei das Auffüllen oder Verkürzen gemäß vorbestimmten Zählwerten des Ringzählers in jeder Kachel durchgeführt wird.

## Revendications

1. Procédé comprenant :
la détection (1805) de symboles d'alignement dans des FIFO d'une pluralité de voies de données d'une pluralité de tuiles, la pluralité de tuiles comprenant une tuile meneuse et une ou plusieurs tuiles suiveuses ;
le fait de déterminer (1810), par un dispositif de commande à plusieurs voies de la tuile meneuse, qu'un symbole d'alignement a été détecté dans le FIFO de chaque voie de chaque tuile en effectuant une opération ET logique sur des signaux d'alignement trouvé spécifiques à la tuile générés par chaque tuile, et en réponse à la génération d'un signal d'alignement trouvé ;
la génération (1815), par un générateur d'horloge de tuile d'écriture dans la tuile meneuse, d'une horloge de tuile d'écriture à partir d'une horloge système locale, l'horloge de tuile d'écriture ayant une période égale à une période d'une horloge de référence commune, l'horloge de tuile d'écriture correspondant à une impulsion ayant un emplacement au sein de la période de l'horloge de référence commune tel que déterminé par un cycle actif d'un compteur ;
la transmission (1820) du signal d'alignement trouvé à une logique de synchronisation dans chacune des tuiles suiveuses en réponse à l'horloge de tuile d'écriture ;
l'échantillonnage du signal d'alignement trouvé à l'aide de la logique de synchronisation au sein de chaque tuile suiveuse et de la tuile meneuse selon l'horloge de référence commune ;
la synchronisation (1825) du signal d'alignement trouvé avec des horloges système générées localement pour chaque tuile de la pluralité de tuiles, et le réglage en réponse d'un pointeur de lecture du FIFO vers un emplacement contenant le symbole d'alignement ; et
le fait de délivrer (1830) des données de chaque FIFO selon les horloges système générées localement.

2. Procédé selon la revendication 1, comprenant en outre le stockage de l'emplacement contenant chaque symbole d'alignement en réponse à la détection de chaque symbole d'alignement dans les FIFO de la pluralité de voies de données ; OU
dans lequel l'emplacement de l'impulsion de l'horloge de tuile d'écriture est associé à un temps de propagation de tuile à tuile ; OU.
dans lequel l'emplacement de l'impulsion de l'horloge de tuile d'écriture est programmable par l'intermédiaire d'un ajustement du cycle actif du compteur ; OU.
dans lequel un décalage maximal entre les données délivrées de chaque FIFO selon les horloges système générées localement est d'au plus une période des horloges système générées localement.

3. Procédé selon la revendication 1, comprenant en outre la génération des signaux d'alignement trouvé spécifiques à la tuile en effectuant une opération ET logique sur des signaux d'alignement trouvé spécifiques à la voie associés à chaque voie de données sur une tuile donnée.

4. Procédé selon la revendication 3, dans lequel chaque signal d'alignement trouvé spécifique à la voie correspond à une impulsion générée en réponse à une détection du symbole d'alignement dans la voie de données, l'impulsion étant étirée pendant un nombre prédéterminé de cycles d'horloge de réception générée localement.

5. Procédé selon la revendication 1, comprenant en outre la synchronisation de valeurs de comptage d'une pluralité de compteurs annulaires, chaque tuile ayant un compteur annulaire correspondant de la pluralité de compteurs annulaires.

6. Procédé selon la revendication 5, comprenant en outre :
la surveillance d'un niveau de remplissage FIFO de chaque FIFO de la pluralité de voies de données ;
la génération d'un signal de statut de niveau de remplissage FIFO en réponse au fait que le niveau de remplissage FIFO dans l'un des FIFO dépasse un seuil ;
la détection d'ensembles ordonnés de saut dans les FIFO de chaque voie de données ; et
le remplissage ou la troncature d'ensembles ordonnés de saut dans chaque FIFO en réponse au signal de statut de niveau de remplissage FIFO, le remplissage ou la troncature étant réalisé selon des valeurs de comptage prédéterminées du compteur annulaire dans chaque tuile.

7. Appareil comprenant :
une logique de détection de symboles d'alignement (805) configurée pour détecter des symboles d'alignement dans des FIFO d'une pluralité de voies de données d'une pluralité de tuiles, la pluralité de tuiles comprenant une tuile meneuse et une ou plusieurs tuiles suiveuses ;
un générateur d'horloge de tuile d'écriture (1306) dans la tuile meneuse (1302) configuré pour générer une horloge de tuile d'écriture à partir d'une horloge système locale, l'horloge de tuile d'écriture ayant une période égale à une période d'une horloge de référence commune, l'horloge de tuile d'écriture correspondant à une impulsion ayant un emplacement au sein de la période de l'horloge de référence commune tel que déterminé par un cycle actif d'un compteur ;
un dispositif de commande à plusieurs voies dans la tuile meneuse configuré pour déterminer qu'un symbole d'alignement a été détecté dans le FIFO de chaque voie de chaque tuile en effectuant une opération ET logique (1310) sur des signaux d'alignement trouvé spécifiques à la tuile générés par chaque tuile, pour générer un signal d'alignement trouvé, et pour transmettre le signal d'alignement trouvé à une logique de synchronisation dans chaque tuile de la pluralité de tuiles en réponse à l'horloge de tuile d'écriture ;
la logique de synchronisation dans chaque tuile suiveuse (1304) configurée pour échantillonner le signal d'alignement trouvé selon l'horloge de référence commune, et pour synchroniser le signal d'alignement trouvé sur des horloges système générées localement pour chaque tuile de la pluralité de tuiles ;
une machine d'état de commande d'alignement (825) dans chaque tuile, configurée pour définir des pointeurs de lecture de chaque FIFO dans la tuile à un emplacement contenant le symbole d'alignement ; et
la pluralité de FIFO configurés pour délivrer des données selon les horloges système générées localement.

8. Appareil selon la revendication 7, dans lequel l'emplacement contenant chaque symbole d'alignement est stocké en réponse à une détection de chaque symbole d'alignement dans les FIFO de la pluralité de voies de données.

9. Appareil selon la revendication 7, dans lequel l'emplacement de l'impulsion de l'horloge de tuile d'écriture est associé à un temps de propagation de tuile à tuile ; OU
dans lequel l'emplacement de l'impulsion de l'horloge de tuile d'écriture est programmable par l'intermédiaire d'un ajustement du cycle actif du compteur ; OU
dans lequel un décalage maximal entre les données délivrées de chaque FIFO selon les horloges système générées localement est d'au plus une période des horloges système générées localement.

10. Appareil selon la revendication 8, comprenant en outre des portes ET logiques spécifiques à la tuile dans chaque tuile configurées pour générer les signaux d'alignement trouvé spécifiques à la tuile en effectuant une opération ET logique sur les signaux d'alignement trouvé spécifiques à la voie associés à chaque voie de données sur une tuile donnée.

11. Appareil selon la revendication 10, dans lequel la logique de détection de symbole d'alignement est configurée pour générer chaque signal d'alignement trouvé spécifique à la voie en tant qu'impulsion générée en réponse à une détection du symbole d'alignement dans la voie de données, et dans lequel chaque voie de données comprend une logique d'étirement d'impulsion configurée pour étirer l'impulsion pour un nombre prédéterminé de cycles d'horloge de réception générée localement.

12. Appareil selon la revendication 7, comprenant en outre un compteur annulaire dans chaque tuile ayant des valeurs de comptage synchronisées par le signal d'alignement trouvé.

13. Appareil selon la revendication 12, comprenant en outre :
une logique de détection de symbole de saut configurée pour détecter des ensembles ordonnés de saut dans les FIFO de chaque voie de données ;
une machine à états finis d'adaptation de débit, FSM, configurée pour surveiller un niveau de remplissage FIFO de chaque FIFO de la pluralité de voies de données et pour générer un signal de statut de niveau de remplissage FIFO en réponse au fait que le niveau de remplissage FIFO dans l'un des FIFO dépasse un seuil, et pour remplir ou tronquer des ensembles ordonnés de saut dans chaque FIFO en réponse au signal de statut de niveau de remplissage FIFO, le remplissage ou la troncature étant réalisé selon des valeurs de comptage prédéterminées du compteur annulaire dans chaque tuile.
